# EUROPÄISCHE PATENTSCHRIFT

(11) **EP 3 816 753 B1**
(45) Veröffentlichungstag und Bekanntmachung des Hinweises auf die Patenterteilung: **10.05.2023**
(21) Anmeldenummer: 19206458.2
(22) Anmeldetag: 31.10.2019
(51) Int. Cl.: G05D 1/02

(54) **VERFAHREN ZUM EINLERNEN MINDESTENS EINES ABSCHNITTS EINES BEGRENZUNGSRANDS EINER FLÄCHE FÜR EIN GRÜNFLÄCHENBEARBEITUNGSSYSTEM, VERFAHREN ZUM BETREIBEN EINES GRÜNFLÄCHENBEARBEITUNGSSYSTEMS, EINLERN-SYSTEM UND GRÜNFLÄCHENBEARBEITUNGSSYSTEM**
METHOD FOR LEARNING AT LEAST ONE SECTION OF A BOUNDARY EDGE OF A SURFACE FOR A SURFACE TREATMENT SYSTEM, METHOD FOR OPERATING A SURFACE PROCESSING SYSTEM, LEARNING SYSTEM AND GREEN AREA PROCESSING SYSTEM
PROCÉDÉ D'APPRENTISSAGE D'AU MOINS UNE SECTION D'UN BORD DE DÉLIMITATION D'UNE SURFACE D'UN SYSTÈME DE TRAITEMENT DES ESPACES VERTS, PROCÉDÉ DE FONCTIONNEMENT D'UN SYSTÈME DE TRAITEMENT DES ESPACES VERTS, SYSTÈME D'APPRENTISSAGE ET SYSTÈME DE TRAITEMENT DES ESPACES VERTS

(43) Veröffentlichungstag der Anmeldung: 05.05.2021
(73) Patentinhaber: Andreas Stihl AG & Co. KG, 71336 Waiblingen (DE)
(72) Erfinder: GRUHLER, Matthias, 71334 Waiblingen (DE); WINTERGERST, Götz, 70374 Stuttgart (DE); MEYER, Stephan, 71332 Waiblingen (DE); VAN ZUTVEN, Petrus, Dr., 6020 Innsbruck (AT); KRÄMER, Sebastian, 6020 Innsbruck (AT); ZÖTTL, Samuel, 6330 Kufstein (AT)
(74) Vertreter: Patentanwälte Ruff, Wilhelm, Beier, Dauster & Partner mbB

(56) Entgegenhaltungen:
- EP-A1- 3 820 343
- WO-A1-2016/097900
- WO-A1-2019/185930
- US-A1- 2016 165 795
- US-A1- 2020 019 156

## Beschreibung

### ANWENDUNGSGEBIET UND STAND DER TECHNIK

Die Erfindung bezieht sich auf ein Verfahren zum Einlernen mindestens eines Abschnitts eines Begrenzungsrands einer Fläche für ein Grünflächenbearbeitungssystem, ein Verfahren zum Betreiben eines Grünflächenbearbeitungssystems aufweisend ein solches Verfahren zum Einlernen, ein Einlern-System zum Einlernen mindestens eines Abschnitts eines Begrenzungsrands einer Fläche für ein Grünflächenbearbeitungssystem und ein Grünflächenbearbeitungssystem aufweisend ein solches Einlern-System.

Die US 2016/0165795 A1 offenbart ein Verfahren zum Kartieren eines Bereichs zu Mähen mit einem autonomen Mähroboter umfassend Empfangen von Kartierungsdaten von einem robotischen Rasenmäher, wobei die Kartierungsdaten einen Bereich zu Mähen und eine Vielzahl von Orten von Beacons, die innerhalb des Bereichs zu Mähen positioniert sind, spezifizieren, und Empfangen mindestens erster und zweiter geographischer Koordinaten für erste und zweite Referenzpunkte, die innerhalb des Bereichs sind und in den Kartierungsdaten spezifiziert sind. Die Kartierungsdaten werden unter Verwendung der ersten und zweiten geographischen Koordinaten zu einem Koordinatensystem eines Kartenbilds des Bereichs ausgerichtet. Das Kartenbild wird basierend auf dem Ausrichten der Kartierungsdaten zu dem Koordinatensystem angezeigt.

Des Weiteren offenbart die WO 2019/185930 A1 ein automatisches Arbeitssystem umfassend ein sich selbst bewegendes Gerät, das sich in einem Arbeitsbereich bewegt und arbeitet, ein Handgerät und ein Kontrollmodul. Das Handgerät ist konfiguriert, um sich entlang eines Umfangs des Arbeitsbereichs mit einem Benutzer zu bewegen, und umfasst ein Detektionsmodul, das die Umfangsinformationen des Arbeitsbereichs detektiert; und ein Eingabemodul, das einen Befehl des Benutzers zum Detektieren der Umfangsinformationen empfängt. Das Kontrollmodul umfasst eine Umfangseinstelleinheit, die virtuelle Daten des Umfangs generiert, eine Flächenberechnungseinheit, die die Fläche des Arbeitsbereichs berechnet, und eine Planungseinheit, die einen Arbeitsplan generiert. Das sich selbst bewegende Gerät umfasst ein Arbeitsmodul, ein Antriebsmodul und einen Kontroller. Der Kontroller kontrolliert das sich selbst bewegende Gerät so, dass es gemäß dem Arbeitsplan arbeitet.

Außerdem offenbart die WO 2016/097900 A1 ein Verfahren zum Verwenden lernbarer Grenzpositionen für einen Begrenzungsbetrieb eines Roboterfahrzeugs umfassend Detektieren temporärer Markierungen einer Grenze auf einem Flurstück über mindestens einen Sensor eines Roboterfahrzeugs, Generieren von koordinaten- oder ortsbasierten Grenzinformationen basierend auf den temporären Markierungen, und Betreiben des Roboterfahrzeugs innerhalb der Grenze basierend auf den generierten koordinaten- oder ortsbasierten Grenzinformationen.

Weiter offenbart die EP 3 820 343 A1 ein Verfahren zum Betreiben oder Interagieren mit einem mobilen Roboter umfassend Bestimmen einer Abbildung zwischen einem ersten Koordinatensystem, das einer mobilen Vorrichtung zugeordnet ist, und einem zweiten Koordinatensystem, das dem mobilen Roboter zugeordnet ist, unter Verwendung mindestens eines Prozessors, wobei das erste Koordinatensystem unterschiedlich ist von dem zweiten Koordinatensystem. Das Verfahren umfasst das Bereitstellen einer Benutzerschnittstelle auf dem mobilen Gerät, um es einem Benutzer zu ermöglichen, mit dem mobilen Roboter zu interagieren, wobei die Interaktion die Verwendung der Abbildung zwischen dem ersten Koordinatensystem und dem zweiten Koordinatensystem involviert.

### AUFGABE UND LÖSUNG

Der Erfindung liegt als Aufgabe die Bereitstellung eines Verfahrens und eines Einlern-Systems zum Einlernen mindestens eines Abschnitts eines Begrenzungsrands einer Fläche für ein Grünflächenbearbeitungssystem zugrunde, das jeweils verbesserte Eigenschaften aufweist. Des Weiteren liegt der Erfindung als Aufgabe die Bereitstellung eines Verfahrens zum Betreiben eines Grünflächenbearbeitungssystems aufweisend ein solches Verfahren zum Einlernen und eines Grünflächenbearbeitungssystems aufweisend ein solches Einlern-System zugrunde.

Die Erfindung löst diese Aufgabe durch die Bereitstellung eines Verfahrens mit den Merkmalen des Anspruchs 1, eines Verfahrens mit den Merkmalen des Anspruchs 9, eines Einlern-Systems mit den Merkmalen des Anspruchs 12 und eines Grünflächenbearbeitungssystems mit den Merkmalen des Anspruchs 15. Vorteilhafte Weiterbildungen und/oder Ausgestaltungen der Erfindung sind in den abhängigen Ansprüchen beschrieben.

Das erfindungsgemäße Verfahren ist zum, insbesondere automatischen, Einlernen mindestens eines Abschnitts eines Begrenzungsrands einer, insbesondere zu bearbeitenden, Fläche für ein, insbesondere elektrisches, Grünflächenbearbeitungssystem ausgebildet bzw. konfiguriert. Das Grünflächenbearbeitungssystem weist einen autonomen mobilen Grünflächenbearbeitungsroboter und ein, insbesondere elektrisches, Roboter-Positionsbestimmungs-System auf. Das Roboter-Positionsbestimmungs-System ist zum Erfassen von Roboter-Positionskoordinaten des Grünflächenbearbeitungsroboters ausgebildet. Die Roboter-Positionskoordinaten basieren auf einer ersten Positionsbestimmungs-Technologie. Das Verfahren weist die Schritte auf: a) Definieren bzw. Festlegen einer Abfolge von Einlern-Positionskoordinaten des Abschnitts, insbesondere durch einen Benutzer. Die Einlern-Positionskoordinaten basieren auf einer von der ersten Positionsbestimmungs-Technologie verschiedenen bzw. ungleichen, insbesondere unähnlichen, zweiten Positionsbestimmungs-Technologie. b) Transformieren, insbesondere automatisches Transformieren, bzw. Umwandeln der definierten Abfolge von Einlern-Positionskoordinaten in eine Abfolge von Transformations-Roboter-Positionskoordinaten. Die Transformations-Roboter-Positionskoordinaten basieren auf der ersten Positionsbestimmungs-Technologie.

Das Verfahren, insbesondere das Transformieren, ermöglicht, dass die Einlern-Positionskoordinaten nicht auf derselben Positionsbestimmungs-Technologie wie die Roboter-Positionskoordinaten basieren brauchen oder können. Somit ermöglicht das Verfahren mehr Freiheiten zum Einlernen. Zusätzlich oder alternativ ermöglicht das Verfahren, dass die erste Positionsbestimmungs-Technologie optimal für das Erfassen der Roboter-Positionskoordinaten und die zweite Positionsbestimmungs-Technologie optimal für das Definieren der Einlern-Positionskoordinaten, insbesondere unabhängig voneinander und/oder gewählt, sein können.

Insbesondere kann die Fläche eine Freifläche, insbesondere ein unversiegelter Boden, oder eine Grünfläche sein, wie eine Wiese mit Rasen. Zusätzlich oder alternativ kann der Begrenzungsrand durch ein Ende der Fläche, insbesondere einen versiegelten Boden, wie z.B. einen Weg und/oder eine Terrasse und/oder eine Ein-, Aus und/oder Durchfahrt und/oder einen Parkplatz, und/oder einen Steinboden, eine Wand, einen Zaun, eine Hecke, ein Beet und/oder anders definiert sein.

Die erste Positionsbestimmungs-Technologie und/oder die zweite Positionsbestimmungs-Technologie können/kann, insbesondere jeweils, durch Aufbau und/oder Funktionsweise und/oder Prinzip definiert sein. Insbesondere können die erste Positionsbestimmungs-Technologie und die zweite Positionsbestimmungs-Technologie in Aufbau und/oder Funktionsweise und/oder Prinzip verschieden bzw. ungleich, insbesondere unähnlich, sein. Zusätzlich oder alternativ brauchen oder können auf der ersten Positionsbestimmungs-Technologie und/oder der zweiten Positionsbestimmungs-Technologie, insbesondere jeweils, verschiedene Positionsbestimmungs-Systeme basieren. Insbesondere kann das Roboter-Positionsbestimmungs-System auf der ersten Positionsbestimmungs-Technologie basieren. In anderen Worten: verschiedene Positionsbestimmungs-Systeme brauchen oder können nicht auf verschiedenen Positionsbestimmungs-Technologien basieren, sondern können in Aufbau und/oder Funktionsweise und/oder Prinzip ähnlich, insbesondere gleich, sein und somit auf derselben Positionsbestimmungs-Technologie basieren. Anders formuliert: die, insbesondere erste und/oder zweite, Positionsbestimmungs-Technologie und ein Positionsbestimmungs-System, insbesondere das Roboter-Positionsbestimmungs-System, können verschieden sein.

Die Roboter-Positionskoordinaten und/oder die Einlern-Positionskoordinaten können/kann, insbesondere jeweils, planare bzw. zweidimensionale oder kubische bzw. dreidimensionale Positionskoordinaten sein.

Das Transformieren kann ein Berechnen aus Einlern-Positionskoordinaten, insbesondere eines jeweiligen Punktes, in einem Einlern-Koordinatensystem, insbesondere in einem Einlern-Bezugssystem, deren Transformations-Roboter-Positionskoordinaten in einem anderen Transformations-Roboter-Koordinatensystem, insbesondere einem anderen Transformations-Roboter-Bezugssystem, aufweisen. Zusätzlich oder alternativ kann das Transformieren ein lineares Transformieren sein.

Der Schritt b) kann zeitlich nach dem Schritt a) ausgeführt werden.

In einer Weiterbildung der Erfindung ist, entweder, die erste Positionsbestimmungs-Technologie oder die zweite Positionsbestimmungs-Technologie, insbesondere globale, Satelliten-Positionsbestimmung, lokale Positionsbestimmung, Funk-Positionsbestimmung, Trägheits-Positionsbestimmung bzw. inertiale Positionsbestimmung, Odometrie-Positionsbestimmung, Ultraschall-Positionsbestimmung, Sonografie-Positionsbestimmung, Sonar-Positionsbestimmung, Radar-Positionsbestimmung, Radargrammetrie-Positionsbestimmung, Tachymeter-Positionsbestimmung bzw. Totalstation-Positionsbestimmung, Lidar-Positionsbestimmung, Laserscanning-Positionsbestimmung, Kamera-Positionsbestimmung, Bild-Positionsbestimmung und/oder Photogrammetrie-Positionsbestimmung.

Insbesondere kann die Satelliten-Positionsbestimmung auf einem Empfangen von Signalen, insbesondere Funk-Signalen, von Navigationssatelliten und Pseudoliten basieren. Zusätzlich oder alternativ basieren NAVSTAR GPS, GLONASS, Galileo und/oder BeiDou auf Satelliten-Positionsbestimmung und somit auf derselben Positionsbestimmungs-Technologie. Weiter zusätzlich oder alternativ kann die die erste Positionsbestimmungs-Technologie oder die zweite Positionsbestimmungs-Technologie differentielle Satelliten-Positionsbestimmung sein.

Die lokale Positionsbestimmung kann auf einem Zusammenwirken, insbesondere einem Austauschen von Signalen, mit mindestens einer lokalen, insbesondere künstlichen, Positionsbestimmungs-Station, insbesondere einem Empfangen von Signalen von der mindestens einen lokalen Positionsbestimmungs-Station, basieren. Insbesondere kann die mindestens eine lokale Positionsbestimmungs-Station an, insbesondere auf, dem Begrenzungsrand und/oder auf der Fläche stationiert sein, insbesondere nur mit der Eignung und/oder dem Zweck zur Positionsbestimmung. Insbesondere kann an dem Begrenzungsrand maximal 10 Meter (m), insbesondere maximal 5 m, insbesondere maximal 2 m, insbesondere maximal 1 m, von dem Begrenzungsrand entfernt außerhalb der Fläche bedeuten. Zusätzlich oder alternativ kann die lokale Positionsbestimmung auf Entfernungs- und/oder Richtungsmessungen in Bezug auf die mindestens eine lokale Positionsbestimmungs-Station, insbesondere Trilateration und/oder Triangulation, Funk-Signalen, Radiowellen, Radar, Ultrabreitband, Bluetooth, WLAN, magnetischen Feldern, akustischen Signalen, Schall, Ultraschall, optischen Signalen, Licht und/oder Laserlicht basieren. Insbesondere kann die mindestens eine lokale Positionsbestimmungs-Station, insbesondere jeweils, als Funkleuchtturm (Englisch: Beacon) und/oder lokaler Positionsbestimmungs-Transmitter bezeichnet werden.

Funk-Positionsbestimmung kann ein Verfahren zur Ortung von Gegenständen, insbesondere der mindestens einen lokalen Positionsbestimmungs-Station, mittels Funk-Signalen aufweisen.

Trägheits-Positionsbestimmung kann auf Messen von Beschleunigungen und/oder Drehraten und Integrieren der gemessenen Beschleunigungen und/oder der gemessenen Drehraten basieren.

Odometrie-Positionsbestimmung kann auf Daten eines Vortriebssystems und/oder einer, insbesondere jeweiligen, Anzahl von Radumdrehungen mindestens eines Rades, insbesondere des Vortriebssystems, basieren.

Ultraschall-Positionsbestimmung kann ein Verfahren zur Ortung von Gegenständen, insbesondere der mindestens einen lokalen Positionsbestimmungs-Station, mittels Ultraschall aufweisen.

Sonografie-Positionsbestimmung kann auf Ultraschall basieren und/oder ein bildgebendes und/oder bildauswertendes Verfahren von Gegenständen, insbesondere keiner lokalen Positionsbestimmungs-Station, an dem Abschnitt und/oder auf der Fläche aufweisen.

Sonar-Positionsbestimmung kann ein Verfahren zur Ortung von Gegenständen, insbesondere der mindestens einen lokalen Positionsbestimmungs-Station, mittels Schall, insbesondere Schallimpulsen, aufweisen.

Radar-Positionsbestimmung kann ein Verfahren zur Ortung von Gegenständen, insbesondere der mindestens einen lokalen Positionsbestimmungs-Station, mittels Radar aufweisen.

Radargrammetrie-Positionsbestimmung kann auf Radar basieren und/oder ein bildgebendes und/oder bildauswertendes Verfahren von Gegenständen, insbesondere keiner lokalen Positionsbestimmungs-Station, an dem Abschnitt und/oder auf der Fläche aufweisen.

Tachymeter-Positionsbestimmung kann auf optischen Signalen und/oder Messen von Horizontalrichtungen, Vertikalwinkeln und/oder Schrägstrecken, insbesondere zu der mindestens einen lokalen Positionsbestimmungs-Station, basieren.

Lidar-Positionsbestimmung kann ein Verfahren zur Ortung von Gegenständen, insbesondere der mindestens einen lokalen Positionsbestimmungs-Station, mittels Licht, insbesondere Laserlicht, aufweisen.

Laserscanning-Positionsbestimmung kann auf Laserlicht basieren und/oder ein bildgebendes und/oder bildauswertendes Verfahren von Gegenständen, insbesondere keiner lokalen Positionsbestimmungs-Station, an dem Abschnitt und/oder auf der Fläche aufweisen.

Kamera-Positionsbestimmung kann auf Aufnehmen von Bildern aus verschiedenen Positionen und/oder mit Tiefeninformation basieren und ein bildauswertendes Verfahren des Abschnitts und/oder der Fläche, insbesondere von Gegenständen, insbesondere keiner lokalen Positionsbestimmungs-Station, an dem Abschnitt und/oder auf der Fläche, aufweisen.

Bild-Positionsbestimmung kann ein bildgebendes und/oder bildauswertendes Verfahren des Abschnitts und/oder der Fläche, insbesondere von Gegenständen, insbesondere keiner lokalen Positionsbestimmungs-Station, an dem Abschnitt und/oder auf der Fläche, aufweisen. Insbesondere kann Bild-Positionsbestimmung auf Ultraschall, Radar und/oder Licht, insbesondere Laserlicht, basieren.

Photogrammetrie-Positionsbestimmung kann auf Licht, insbesondere Laserlicht, basieren und/oder ein bildgebendes und/oder bildauswertendes Verfahren des Abschnitts und/oder der Fläche, insbesondere von Gegenständen, insbesondere keiner lokalen Positionsbestimmungs-Station, an dem Abschnitt und/oder auf der Fläche, aufweisen.

In einer Weiterbildung der Erfindung weist der Schritt a) auf: Erfassen, insbesondere automatisches Erfassen, bzw. Bestimmen bzw. Ermitteln der Abfolge von Einlern-Positionskoordinaten mittels eines, insbesondere elektrischen, Einlern-Positionsbestimmungs-Systems, insbesondere mindestens eines Teils des Einlern-Positionsbestimmungs-Systems, insbesondere des vollständigen Einlern-Positionsbestimmungs-Systems, an, insbesondere auf, dem Abschnitt und/oder auf der Fläche. Dies ermöglicht ein einfaches und somit benutzerfreundliches und/oder genaues Definieren der Abfolge von Einlern-Positionskoordinaten. Insbesondere kann das Erfassen mittels eines Wechselwirkens des Einlern-Positionsbestimmungs-Systems mit dem Begrenzungsrand erfolgen. Zusätzlich oder alternativ kann das Einlern-Positionsbestimmungs-System von dem Roboter-Positionsbestimmungs-System verschieden sein. Zusätzlich oder alternativ kann das Einlern-Positionsbestimmungs-System ein Einlern-Positionsbestimmungs-Gerät aufweisen, insbesondere sein. Weiter zusätzlich oder alternativ kann das mindestens eine Teil, insbesondere das vollständige Einlern-Positionsbestimmungs-System, ein Empfänger, ein Sender und/oder ein Reflektor und/oder portabel sein. Insbesondere kann portabel als handgeführt, insbesondere handgetragen, bezeichnet werden. Handgeführt, insbesondere handgetragen, kann bedeuten, dass das Teil eine maximale Masse von 50 Kilogramm (kg), insbesondere von 20 kg, insbesondere von 10 kg, aufweisen kann. Weiter zusätzlich oder alternativ kann an dem Begrenzungsrand maximal 10 m, insbesondere maximal 5 m, insbesondere maximal 2 m, insbesondere maximal 1 m, von dem Begrenzungsrand entfernt außerhalb der Fläche bedeuten.

In einer Ausgestaltung der Erfindung weist der Schritt a) auf: Führen des mindestens einen Teils des Einlern-Positionsbestimmungs-Systems, insbesondere des vollständigen Einlern-Positionsbestimmungs-Systems, entlang mindestens des Abschnitts, insbesondere durch einen Benutzer, und Erfassen von, insbesondere den, Einlern-Positionskoordinaten, insbesondere einer Einlern-Position, des mindestens einen Teils, insbesondere des vollständigen Einlern-Positionsbestimmungs-Systems, während des Führens. Dies ermöglicht ein besonders einfaches und somit besonders benutzerfreundliches und/oder besonders genaues Definieren der Abfolge von Einlern-Positionskoordinaten.

In einer Weiterbildung der Erfindung weist der Schritt b) auf: Verschieben, Drehen und/oder Skalieren. Insbesondere kann Verschieben als Translation bezeichnet werden. Zusätzlich oder alternativ kann Drehen als Rotation bezeichnet werden. Weiter zusätzlich oder alternativ kann Skalieren als Veränderung eines Maßstabs bezeichnet werden.

In einer Weiterbildung der Erfindung weist das Verfahren den Schritt auf: Kennzeichnen, insbesondere automatisches Kennzeichnen und/oder durch den Benutzer, von, insbesondere einem Paar von, Bezugspunkt-Einlern-Positionskoordinaten in Bezug auf die, insbesondere der, Abfolge von Einlern-Positionskoordinaten. Des Weiteren weist das Verfahren den Schritt auf: Kennzeichnen, insbesondere automatisches Kennzeichnen und/oder durch den Benutzer, von, insbesondere einem Paar von, Bezugs-Transformations-Roboter-Positionskoordinaten in Bezug für die Abfolge von Transformations-Roboter-Positionskoordinaten. Der Schritt b) weist auf: Transformieren unter Erfüllung der Bedingung, dass die gekennzeichneten Bezugspunkt-Einlern-Positionskoordinaten und die gekennzeichneten Bezugspunkt-Transformations-Roboter-Positionskoordinaten einen selben Bezugspunkt kennzeichnen. Dies ermöglicht das Verschieben, soweit vorhanden und/oder erforderlich.

In einer Ausgestaltung der Erfindung weist das Verfahren den Schritt auf: Kennzeichnen, insbesondere automatisches Kennzeichnen und/oder durch den Benutzer, von, insbesondere einem weiteren Paar von, weiteren Bezugspunkt-Einlern-Positionskoordinaten in Bezug auf die, insbesondere der, Abfolge von Einlern-Positionskoordinaten. Des Weiteren weist das Verfahren den Schritt auf: Kennzeichnen, insbesondere automatisches Kennzeichnen und/oder durch den Benutzer, von, insbesondere einem weiteren Paar von, weiteren Bezugspunkt-Transformations-Roboter-Positionskoordinaten in Bezug für die Abfolge von Transformations-Roboter-Positionskoordinaten. Der Schritt b) weist auf: Transformieren unter Erfüllung der Bedingung, dass die gekennzeichneten weiteren Bezugspunkt-Einlern-Positionskoordinaten und die gekennzeichneten weiteren Bezugspunkt-Transformations-Roboter-Positionskoordinaten einen selben weiteren Bezugspunkt kennzeichnen.

Zusätzlich oder alternativ weist das Verfahren den Schritt auf: Kennzeichnen, insbesondere automatisches Kennzeichnen und/oder durch den Benutzer, einer Einlern-Orientierung an den, insbesondere gekennzeichneten, Bezugspunkt-Einlern-Positionskoordinaten in Bezug auf die Abfolge von Einlern-Positionskoordinaten. Des Weiteren weist das Verfahren den Schritt auf: Kennzeichnen, insbesondere automatisches Kennzeichnen und/oder durch den Benutzer, einer Transformations-Roboter-Orientierung an den, insbesondere gekennzeichneten, Bezugspunkt-Transformations-Roboter-Positionskoordinaten in Bezug für die Abfolge von Transformations-Roboter-Positionskoordinaten. Der Schritt b) weist auf: Transformieren unter Erfüllung der Bedingung, dass die gekennzeichnete Einlern-Orientierung und die gekennzeichnete Transformations-Roboter-Orientierung eine selbe Bezugsorientierung an dem Bezugspunkt kennzeichnen.

Dies, insbesondere der weitere Bezugspunkt, ermöglicht das Drehen und/oder das Skalieren soweit vorhanden und/oder erforderlich. Zusätzlich oder alternativ ermöglicht dies, insbesondere die Bezugsorientierung, ein Drehen, soweit vorhanden und/oder erforderlich. Insbesondere braucht oder kann der weitere Bezugspunkt nicht erforderlich sein, insbesondere unter der Annahme, dass ein Skalieren nicht erforderlich sein braucht oder kann. Zusätzlich oder alternativ kann Orientierung an den Positionskoordinaten in Bezug auf und/oder für die Abfolge von Positionskoordinaten parallel oder orthogonal zu der Abfolge von Positionskoordinaten an den Positionskoordinaten, insbesondere in einer durch die Abfolge von Positionskoordinaten definierten Ebene und/oder in eine durch die Abfolge von Positionskoordinaten definierte geschlossene Kurve hinein oder heraus, bedeuten.

In einer Ausgestaltung der Erfindung ist der, insbesondere weitere, Bezugspunkt durch eine Dockingstations-Position einer, insbesondere elektrischen, Dockingstation für den Grünflächenbearbeitungsroboter und/oder durch eine, insbesondere von der Dockingstations-Position verschiedene, Roboter-Position des Grünflächenbearbeitungsroboters, insbesondere an, insbesondere auf, dem Abschnitt, gekennzeichnet. Insbesondere ist die Bezugsorientierung durch eine Dockingstations-Orientierung der Dockingstation und/oder durch eine Roboter-Orientierung des Grünflächenbearbeitungsroboters, insbesondere an dem Abschnitt, gekennzeichnet. Dies ermöglicht ein einfaches Kennzeichnen. Insbesondere kann die Dockingstation eine, insbesondere elektrische, Ladestation zum, insbesondere elektrischen, Aufladen, des Grünflächenbearbeitungsroboters, insbesondere mit Antriebsenergie, sein. Zusätzlich oder alternativ kann die Dockingstations-Orientierung durch eine Längsachse und/oder eine Mittelachse und/oder eine Andockachse der Dockingstation definiert sein. Weiter zusätzlich oder alternativ kann die Roboter-Orientierung durch eine Längsachse und/oder eine Mittelachse und/oder eine Andockachse des Grünflächenbearbeitungsroboters definiert sein. Weiter zusätzlich oder alternativ kann die Dockingstation mit der Dockingstations-Orientierung an dem Abschnitt parallel oder orthogonal zu diesem positioniert sein. Weiter zusätzlich oder alternativ kann der Grünflächenbearbeitungsroboter mit der Roboter-Orientierung an dem Abschnitt parallel oder orthogonal zu diesem positioniert sein. Weiter zusätzlich oder alternativ können die Roboter-Position für den Bezugspunkt und für den weiteren Bezugspunkt mittels Bewegens des Grünflächenbearbeitungsroboters, insbesondere gesteuert durch den Benutzer, erreicht werden.

Das erfindungsgemäße Verfahren ist zum, insbesondere automatischen, Betreiben eines, insbesondere des, Grünflächenbearbeitungssystems ausgebildet bzw. konfiguriert. Das Grünflächenbearbeitungssystem weist einen, insbesondere den, autonomen mobilen Grünflächenbearbeitungsroboter, ein, insbesondere das, Roboter-Positionsbestimmungs-System und ein, insbesondere elektrisches, Vergleichs- und Steuersystem auf. Das Roboter-Positionsbestimmungs-System ist zum, insbesondere automatischen, Erfassen bzw. Bestimmen bzw. Ermitteln von Roboter-Positionskoordinaten, insbesondere der Roboter-Position, des Grünflächenbearbeitungsroboters, insbesondere auf der Fläche, ausgebildet bzw. konfiguriert. Die Roboter-Positionskoordinaten basieren auf einer, insbesondere der, ersten Positionsbestimmungs-Technologie. Das Vergleichs- und Steuersystem ist zum, insbesondere automatischen, Vergleichen der erfassten Roboter-Positionskoordinaten mit einer, insbesondere der, Abfolge von Transformations-Roboter-Positionskoordinaten und zum, insbesondere automatischen, Steuern eines Bewegens des Grünflächenbearbeitungsroboters, insbesondere auf der Fläche, in Abhängigkeit von einem Ergebnis des Vergleichs ausgebildet bzw. konfiguriert. Die Transformations-Roboter-Positionskoordinaten basieren auf der ersten Positionsbestimmungs-Technologie Das Verfahren weist ein Verfahren wie zuvor beschrieben zum Einlernen, insbesondere des, mindestens eines Abschnitts eines, insbesondere des, Begrenzungsrands einer, insbesondere der, Fläche auf. Des Weiteren weist das Verfahren die Schritte auf: Erfassen, insbesondere automatisches Erfassen, bzw. Bestimmen bzw. Ermitteln von Roboter-Positionskoordinaten, insbesondere der Roboter-Position, des Grünflächenbearbeitungsroboters, insbesondere auf der Fläche, mittels des Roboter-Positionsbestimmungs-Systems. Vergleichen, insbesondere automatisches Vergleichen, der erfassten Roboter-Positionskoordinaten mit der Abfolge von Transformations-Roboter-Positionskoordinaten mittels des Vergleichs- und Steuersystems. Steuern, insbesondere automatisches Steuern, des Bewegens des Grünflächenbearbeitungsroboters, insbesondere auf der Fläche, in Abhängigkeit von dem Ergebnis des Vergleichs mittels des Vergleichs- und Steuersystems, insbesondere derart, dass der Grünflächenbearbeitungsroboter auf der Fläche bleibt, insbesondere innerhalb des Begrenzungsrands.

Dies ermöglicht ein autonomes Bearbeiten der Fläche mittels des Grünflächenbearbeitungsroboters.

Insbesondere kann autonom bearbeiten bedeuten, dass sich der Grünflächenbearbeitungsroboter auf der Fläche selbstständig, selbsttätig, selbstbestimmt, selbstgesteuert und/oder unabhängig von einem Benutzer bewegen und/oder agieren und/oder zumindest einen Parameter, wie insbesondere einen Streckenparameter, und/oder einen Umkehrpunkt auswählen kann. Zusätzlich oder alternativ kann autonom bearbeiten bedeuten, dass der Grünflächenbearbeitungsroboter selbstständig mit einem Bearbeiten beginnen und/oder das Bearbeiten beenden kann. Weiter zusätzlich oder alternativ braucht oder kann beim autonomen Bearbeiten der Grünflächenbearbeitungsroboter nicht durch den Benutzer gesteuert zu sein, insbesondere nicht ferngesteuert. In anderen Worten: bei dem autonomen Bearbeiten kann der Grünflächenbearbeitungsroboter insbesondere ohne menschliche Steuerung und/oder Führung bearbeiten. Weiter zusätzlich oder alternativ kann der Grünflächenbearbeitungsroboter als Serviceroboter und/oder Dienstleistungsroboter bezeichnet werden.

Der Grünflächenbearbeitungsroboter kann zum Bearbeiten der Fläche ausgebildet sein. Insbesondere kann der Grünflächenbearbeitungsroboter ein Bearbeitungswerkzeug aufweisen.

Das Erfassen kann mittels eines Wechselwirkens des Roboter-Positionsbestimmungs-System mit dem Begrenzungsrand erfolgen.

Das Roboter-Positionsbestimmungs-System kann ein Roboter-Positionsbestimmungs-Gerät aufweisen, insbesondere sein.

Das Roboter-Positionsbestimmungs-System kann einen Empfänger aufweisen, insbesondere sein.

In einer Weiterbildung der Erfindung weist der Grünflächenbearbeitungsroboter das Roboter-Positionsbestimmungs-System, insbesondere mindestens teilweise oder vollständig, auf.

In einer Weiterbildung der Erfindung ist der Grünflächenbearbeitungsroboter als ein Rasenmähroboter, insbesondere mit einem Rasenmähwerkzeug, ausgebildet bzw. konfiguriert. Insbesondere kann der Grünflächenbearbeitungsroboter als ein Mulchmähroboter ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann das Rasenmähwerkzeug als ein rotierendes Rasenmähwerkzeug und dazu ausgebildet sein, das zu mähende Gut im sogenannten Freischnittverfahren ohne Gegenschneide zu mähen, insbesondere durch Zentrifugalkraft des Rasenmähwerkzeugs einen Schneidvorgang zu erzeugen.

Das erfindungsgemäße Einlern-System ist zum, insbesondere automatischen, Einlernen, insbesondere des, mindestens eines Abschnitts eines, insbesondere des, Begrenzungsrands einer, insbesondere der, Fläche für ein, insbesondere das, Grünflächenbearbeitungssystem, insbesondere zum Ausführen eines Verfahrens wie zuvor beschrieben zum Einlernen, insbesondere des, mindestens eines Abschnitts eines, insbesondere des, Begrenzungsrands einer, insbesondere der, Fläche, ausgebildet bzw. konfiguriert. Das Grünflächenbearbeitungssystem weist einen, insbesondere den, autonomen mobilen Grünflächenbearbeitungsroboter und ein, insbesondere das, Roboter-Positionsbestimmungs-System auf. Das Roboter-Positionsbestimmungs-System ist zum Erfassen von Roboter-Positionskoordinaten des Grünflächenbearbeitungsroboters ausgebildet. Die Roboter-Positionskoordinaten basieren auf einer, insbesondere der, ersten Positionsbestimmungs-Technologie. Das Einlern-System weist eine, insbesondere elektrische und/oder benutzerbetätigbare, Definierungs-Einrichtung und eine, insbesondere elektrische, insbesondere elektronische, Transformierungs-Einrichtung auf. Die Definierungs-Einrichtung ist zum, insbesondere automatischen, Definieren einer, insbesondere der, Abfolge von Einlern-Positionskoordinaten des Abschnitts ausgebildet bzw. konfiguriert, insbesondere durch den Benutzer. Die Einlern-Positionskoordinaten basieren auf einer, insbesondere der, von der ersten Positionsbestimmungs-Technologie verschiedenen, zweiten Positionsbestimmungs-Technologie. Die Transformierungs-Einrichtung ist zum, insbesondere automatischen, Transformieren der definierten Abfolge von Einlern-Positionskoordinaten in eine, insbesondere die, Abfolge von Transformations-Roboter-Positionskoordinaten ausgebildet bzw. konfiguriert. Die Transformations-Roboter-Positionskoordinaten basieren auf der ersten Positionsbestimmungs-Technologie.

Das Einlern-System kann dieselben Vorteile wie zuvor für das Verfahren zum Einlernen beschrieben ermöglichen.

Insbesondere können/kann das Grünflächenbearbeitungssystem, der Grünflächenbearbeitungsroboter, das Roboter-Positionsbestimmungs-System, die erste Positionsbestimmungs-Technologie und/oder die zweite Positionsbestimmungs-Technologie teilweise oder vollständig wie zuvor für das Verfahren zum Einlernen und/oder zum Betreiben beschrieben ausgebildet sein.

Das Einlern-System kann ein portables, insbesondere und elektrisches und/oder benutzerbetätigbares, Einlern-Gerät aufweisen. Das Einlern-Gerät kann die Definierungs-Einrichtung und/oder die Transformierungs-Einrichtung, insbesondere teilweise oder vollständig, aufweisen. Insbesondere kann portabel als handgeführt, insbesondere handgetragen, bezeichnet werden. Handgeführtes, insbesondere handgetragenes, Gerät kann bedeuten, dass das Einlern-Gerät eine maximale Masse von 50 kg, insbesondere von 20 kg, insbesondere von 10 kg, aufweisen kann. Zusätzlich oder alternativ kann das portable Einlern-Gerät ein Smartphone und/oder ein Tablet sein. Weiter zusätzlich oder alternativ können die Definierungs-Einrichtung und die Transformierungs-Einrichtung getrennt bzw. separat voneinander sein. Weiter zusätzlich oder alternativ kann die Transformierungs-Einrichtung ein Computer, insbesondere Cloud-Server, sein.

In einer Weiterbildung der Erfindung weist die Definierungs-Einrichtung ein, insbesondere das, Einlern-Positionsbestimmungs-System auf. Das Einlern-Positionsbestimmungs-System ist zum, insbesondere automatischen, Erfassen der Abfolge von Einlern-Positionskoordinaten ausgebildet bzw. konfiguriert. Insbesondere kann das Einlern-Positionsbestimmungs-System teilweise oder vollständig wie zuvor für das Verfahren zum Einlernen beschrieben ausgebildet sein. Zusätzlich oder alternativ kann das Einlern-Gerät, soweit vorhanden, mindestens den Teil des Einlern-Positionsbestimmungs-System, insbesondere das vollständige Einlern-Positionsbestimmungs-System, aufweisen.

In einer Weiterbildung der Erfindung weist das Einlern-System eine, insbesondere elektrische und/oder benutzerbetätigbare, Kennzeichnungs-Einrichtung auf. Die Kennzeichnungs-Einrichtung ist zum Kennzeichnen, insbesondere automatisches Kennzeichnen und/oder durch den Benutzer, von Bezugspunkt-Einlern-Positionskoordinaten in Bezug auf die, insbesondere der, Abfolge von, insbesondere den, Einlern-Positionskoordinaten und zum Kennzeichnen, insbesondere automatisches Kennzeichnen und/oder durch den Benutzer, von, insbesondere den, Bezugspunkt-Transformations-Roboter-Positionskoordinaten in Bezug für die Abfolge von Transformations-Roboter-Positionskoordinaten ausgebildet bzw. konfiguriert. Die Transformierungs-Einrichtung ist zum Transformieren unter Erfüllung der Bedingung, dass die gekennzeichneten Bezugspunkt-Einlern-Positionskoordinaten und die gekennzeichneten Bezugspunkt-Transformations-Roboter-Positionskoordinaten einen selben, insbesondere denselben, Bezugspunkt kennzeichnen, ausgebildet bzw. konfiguriert. Insbesondere kann das Einlern-Gerät, soweit vorhanden, die Kennzeichnungs-Einrichtung, mindestens teilweise oder vollständig, aufweisen. Zusätzlich oder alternativ kann das Einlern-System, insbesondere die Kennzeichnungs-Einrichtung, ein Eingabegerät, insbesondere einen Touchscreen, eine Tastatur und/oder eine Maus, zum Kennzeichnen aufweisen.

Das erfindungsgemäße Grünflächenbearbeitungssystem weist ein Einlern-System wie zuvor beschrieben, einen, insbesondere den, autonomen mobilen Grünflächenbearbeitungsroboter, ein, insbesondere das, Roboter-Positionsbestimmungs-System, und ein, insbesondere das, Vergleichs- und Steuersystem auf. Das Roboter-Positionsbestimmungs-System ist zum, insbesondere automatischen, Erfassen von Roboter-Positionskoordinaten des Grünflächenbearbeitungsroboters ausgebildet bzw. konfiguriert. Die Roboter-Positionskoordinaten basieren auf einer, insbesondere der, ersten Positionsbestimmungs-Technologie. Das Vergleichs- und Steuersystem ist zum, insbesondere automatischen, Vergleichen der erfassten Roboter-Positionskoordinaten mit einer, insbesondere der, Abfolge von Transformations-Roboter-Positionskoordinaten und zum, insbesondere automatischen, Steuern eines, insbesondere des, Bewegens des Grünflächenbearbeitungsroboters in Abhängigkeit von einem, insbesondere dem, Ergebnis des Vergleichs ausgebildet bzw. konfiguriert. Die Transformations-Roboter-Positionskoordinaten basieren auf der ersten Positionsbestimmungs-Technologie.

Das Grünflächenbearbeitungssystem kann dieselben Vorteile wie zuvor für das Verfahren zum Betreiben beschrieben ermöglichen.

Insbesondere können/kann das Grünflächenbearbeitungssystem, der Grünflächenbearbeitungsroboter, das Roboter-Positionsbestimmungs-System und/oder das Vergleichs- und Steuersystem teilweise oder vollständig wie zuvor für das Verfahren zum Einlernen und/oder zum Betreiben beschrieben ausgebildet sein.

Der Grünflächenbearbeitungsroboter kann das Vergleichs- und Steuersystem, insbesondere mindestens teilweise oder vollständig, aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematisches Ansicht eines erfindungsgemäßen Verfahrens und eines erfindungsgemäßen Einlern-Systems zum Einlernen mindestens eines Abschnitts eines Begrenzungsrands einer Fläche für ein erfindungsgemäßes Grünflächenbearbeitungssystem aufweisend ein Definieren, insbesondere ein Erfassen einer Abfolge von Einlern-Positionskoordinaten,
- Fig. 2: eine schematische Ansicht der definierten Abfolge von Einlern-Positionskoordinaten der Fig. 1,
- Fig. 3: eine weitere schematische Ansicht des Verfahrens der Fig. 1 aufweisend ein Transformieren, insbesondere aufweisend ein Verschieben, der definierten Abfolge von Einlern-Positionskoordinaten in eine Abfolge von Transformations-Roboter-Positionskoordinaten, insbesondere aufweisend ein Verschieben,
- Fig. 4: eine weitere schematische Ansicht des Transformierens, insbesondere aufweisend ein Drehen,
- Fig. 5: eine weitere schematische Ansicht des Transformierens, insbesondere aufweisend ein Skalieren,
- Fig. 6: eine schematische Ansicht der Abfolge von Transformations-Roboter-Positionskoordinaten und eines erfindungsgemäßen Verfahrens zum Betreiben des erfindungsgemäßen Grünflächenbearbeitungssystems und des erfindungsgemäßen Grünflächenbearbeitungssystems, und
- Fig. 7: eine weitere schematische Ansicht des erfindungsgemäßen Verfahrens und des erfindungsgemäßen Einlern-Systems zum Einlernen mindestens des Abschnitts des Begrenzungsrands der Fläche für das erfindungsgemäße Grünflächenbearbeitungssystem aufweisend das Definieren, insbesondere das Erfassen der Abfolge von Einlern-Positionskoordinaten.

### DETAILLIERTE BESCHREIBUNG DER AUSFÜHRUNGSBEISPIELE

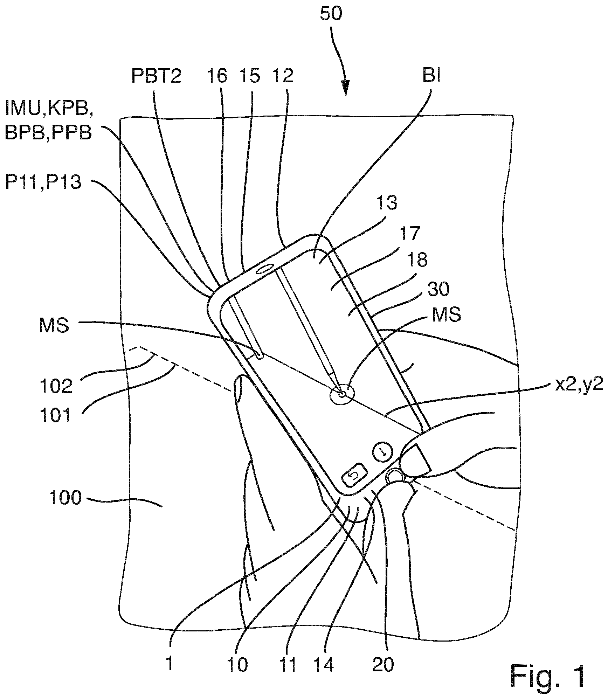

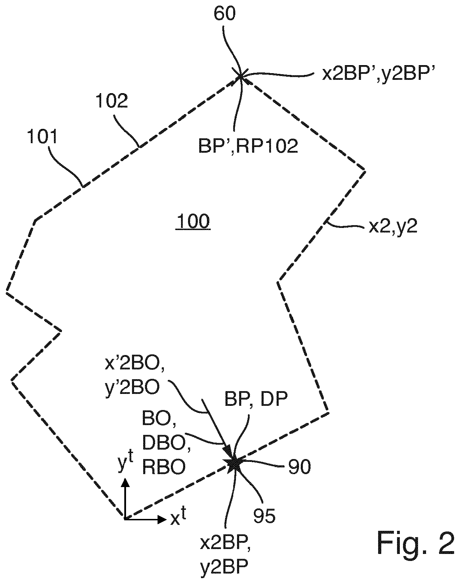

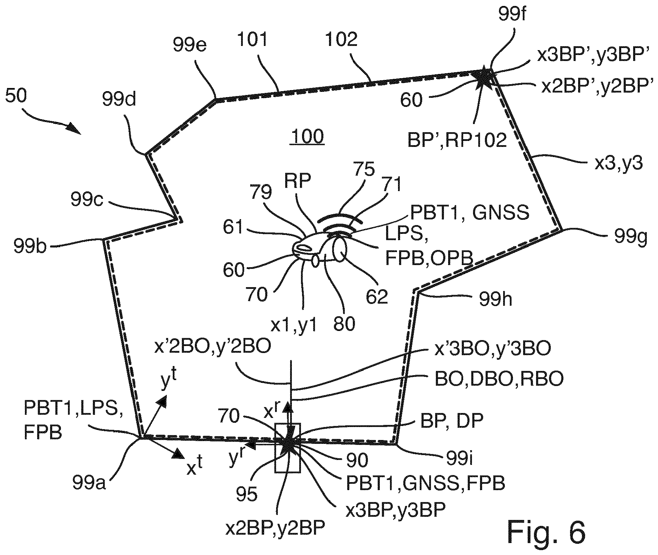

Fig. 1 bis 7 zeigen ein erfindungsgemäßes Verfahren zum Betreiben eines erfindungsgemäßen Grünflächenbearbeitungssystems 50.

Das Grünflächenbearbeitungssystem 50 weist einen autonomen mobilen Grünflächenbearbeitungsroboter 60 und ein Roboter-Positionsbestimmungs-System 70, insbesondere und ein Vergleichs- und Steuersystem 80 auf. Das Roboter-Positionsbestimmungs-System 70 ist zum Erfassen von Roboter-Positionskoordinaten x1, y1 des Grünflächenbearbeitungsroboters 60 ausgebildet, insbesondere in einem Transformations-Roboter-Koordinatensystem xr, yr. Die Roboter-Positionskoordinaten x1, y1 basieren auf einer ersten Positionsbestimmungs-Technologie PBT1. Das Vergleichs- und Steuersystem 80 ist zum Vergleichen der erfassten Roboter-Positionskoordinaten x1, y1 mit einer Abfolge von Transformations-Roboter-Positionskoordinaten x3, y3 und zum Steuern eines Bewegens des Grünflächenbearbeitungsroboters 60 in Abhängigkeit von einem Ergebnis des Vergleichs ausgebildet. Die Transformations-Roboter-Positionskoordinaten x3, y3 basieren auf der ersten Positionsbestimmungs-Technologie PBT1.

Das Verfahren zum Betreiben weist ein erfindungsgemäßes Verfahren zum Einlernen mindestens eines Abschnitts 102 eines Begrenzungsrands 101, in den gezeigten Ausführungsbeispielen des vollständigen Begrenzungsrands 101, einer, insbesondere zu bearbeitenden, Fläche 100 für das Grünflächenbearbeitungssystem 50 auf. Das Verfahren weist die Schritte auf: a) Definieren einer Abfolge von Einlern-Positionskoordinaten x2, y2 des Abschnitts 102, insbesondere des vollständigen Begrenzungsrands 101, insbesondere in einem Einlern-Koordinatensystem xt, yt. Die Einlern-Positionskoordinaten x2, y2 basieren auf einer von der ersten Positionsbestimmungs-Technologie PBT1 verschiedenen, zweiten Positionsbestimmungs-Technologie PBT2. b) Transformieren der definierten Abfolge von Einlern-Positionskoordinaten x2, y2 in die Abfolge von Transformations-Roboter-Positionskoordinaten x3, y3, insbesondere in dem Transformations-Roboter-Koordinatensystem xr, yr. Die Transformations-Roboter-Positionskoordinaten x3, y3 basieren auf der ersten Positionsbestimmungs-Technologie PBT1.

Des Weiteren weist das Grünflächenbearbeitungssystem 50 ein erfindungsgemäßes Einlern-System 1 auf. Das Einlern-System 1 ist zum Einlernen des mindestens einen Abschnitts 102 des Begrenzungsrands 101 der Fläche 100 für das Grünflächenbearbeitungssystem ausgebildet. Das Einlern-System 1 weist eine, insbesondere benutzerbetätigbare, Definierungs-Einrichtung 10 und eine Transformierungs-Einrichtung 20 auf. Die Definierungs-Einrichtung 10 ist zum Definieren der Abfolge von Einlern-Positionskoordinaten x2, y2 des Abschnitts 102 ausgebildet. Die Einlern-Positionskoordinaten x2, y2 basieren auf der von der ersten Positionsbestimmungs-Technologie PBT1 verschiedenen, zweiten Positionsbestimmungs-Technologie PBT2. Die Transformierungs-Einrichtung 20 ist zum Transformieren der definierten Abfolge von Einlern-Positionskoordinaten x2, y2 in eine die Abfolge von Transformations-Roboter-Positionskoordinaten x3, y3 ausgebildet. Die Transformations-Roboter-Positionskoordinaten x3, y3 basieren auf der ersten Positionsbestimmungs-Technologie PBT1.

Außerdem weist das Verfahren zum Betreiben die Schritte auf: Erfassen von den Roboter-Positionskoordinaten x1, y1 des Grünflächenbearbeitungsroboters 60 mittels des Roboter-Positionsbestimmungs-Systems 70. Vergleichen der erfassten Roboter-Positionskoordinaten x1, y1 mit der Abfolge von Transformations-Roboter-Positionskoordinaten x3, y3 mittels des Vergleichs- und Steuersystems 80. Steuern des Bewegens des Grünflächenbearbeitungsroboters 60 in Abhängigkeit von dem Ergebnis des Vergleichs mittels des Vergleichs- und Steuersystems 80, insbesondere derart, dass der Grünflächenbearbeitungsroboter 60 auf der Fläche 100 bleibt, insbesondere innerhalb des Begrenzungsrands 101.

Insbesondere sind das Roboter-Positionsbestimmungs-System 70 und das Vergleichs- und Steuersystem 80 dazu ausgebildet, Zusammenzuwirken um das Vergleichen und das Steuern zu ermöglichen. Des Weiteren sind die Definierungs-Einrichtung 10 und die Transformierungs-Einrichtung 20 dazu ausgebildet, Zusammenzuwirken um das Transformieren zu ermöglichen. Außerdem sind die Transformierungs-Einrichtung 20 und das Vergleichs- und Steuersystem 80 dazu ausgebildet, Zusammenzuwirken um das Vergleichen und das Steuern zu ermöglichen.

Im Detail weist der Grünflächenbearbeitungsroboter 60 das Roboter-Positionsbestimmungs-System 70, insbesondere mindestens teilweise oder vollständig, auf.

Weiter weist der Grünflächenbearbeitungsroboter 60 das Vergleichs- und Steuersystem 80 auf.

Zudem ist der Grünflächenbearbeitungsroboter 60 als ein Rasenmähroboter 61 ausgebildet.

Des Weiteren ist in den gezeigten Ausführungsbeispielen die Fläche 100 eine Wiese mit Rasen.

Außerdem ist in den gezeigten Ausführungsbeispielen der Begrenzungsrand 101 durch ein Ende der Fläche 100, insbesondere in Form eines Wegs und einer Wand, definiert.

Weiter ist in den gezeigten Ausführungsbeispielen die erste Positionsbestimmungs-Technologie PBT1 Satelliten-Positionsbestimmung GNSS, lokale Positionsbestimmung LPS, Funk-Positionsbestimmung FPB und/oder Odometrie-Positionsbestimmung OPB.

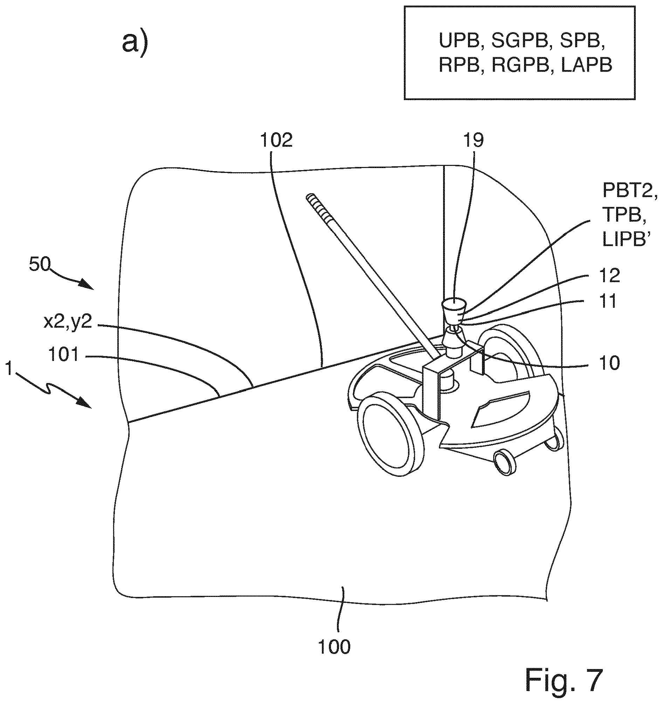

In alternativen Ausführungsbeispielen kann die erste Positionsbestimmungs-Technologie, insbesondere entweder, Satelliten-Positionsbestimmung, lokale Positionsbestimmung, Funk-Positionsbestimmung, Trägheits-Positionsbestimmung, Odometrie-Positionsbestimmung, Ultraschall-Positionsbestimmung UPB, wie in Fig. 7 angedeutet, Sonografie-Positionsbestimmung SGPB, wie in Fig. 7 angedeutet, Sonar-Positionsbestimmung SPB, wie in Fig. 7 angedeutet, Radar-Positionsbestimmung RPB, wie in Fig. 7 angedeutet, Radargrammetrie-Positionsbestimmung RGPB, wie in Fig. 7 angedeutet, Tachymeter-Positionsbestimmung, Lidar-Positionsbestimmung, Laserscanning-Positionsbestimmung LAPB, wie in Fig. 7 angedeutet, Kamera-Positionsbestimmung, Bild-Positionsbestimmung und/oder Photogrammetrie-Positionsbestimmung sein, wobei die erste Positionsbestimmungs-Technologie von der zweiten Positionsbestimmungs-Technologie verschieden ist.

Im Detail weist in den gezeigten Ausführungsbeispielen das Roboter-Positionsbestimmungs-System 70, insbesondere der Grünflächenbearbeitungsroboter 60, einen Satelliten-Positionsbestimmungs-Empfänger bzw. GNSS-Empfänger oder Funk-Empfänger bzw. FPB-Empfänger 71 zum Empfangen von globalen Signalen, insbesondere globalen Funk-Signalen, von Navigationssatelliten und Pseudoliten auf.

Zudem weist das Grünflächenbearbeitungssystem 50, insbesondere das Roboter-Positionsbestimmungs-System 70, einen Referenz-Satelliten-Positionsbestimmungs-Empfänger bzw. Referenz-GNSS-Empfänger oder Referenz-Funk-Empfänger bzw. Referenz-FPB-Empfänger 95 zum Empfangen von globalen Signalen, insbesondere globalen Funk-Signalen, von Navigationssatelliten und Pseudoliten auf. Der Referenz- Empfänger 95 ist an dem Abschnitt 102 des Begrenzungsrands 101 stationiert. Der Satelliten-Positionsbestimmungs-Empfänger bzw. GNSS-Empfänger oder Funk-Empfänger bzw. FPB-Empfänger 71 und der Referenz-Empfänger 95 sind dazu ausgebildet, Zusammenzuwirken, insbesondere in Signalverbindung miteinander zu stehen, um die Positionsbestimmung relativ genau zu ermöglichen.

Des Weiteren weist das Grünflächenbearbeitungssystem 50 eine Dockingstation 90 für den Grünflächenbearbeitungsroboter 60 auf. In den gezeigten Ausführungsbeispielen ist die Dockingstation 90 an dem Abschnitt 102 des Begrenzungsrands 101 stationiert. In alternativen Ausführungsbeispielen kann die Dockingstation innerhalb des Begrenzungsrands bzw. auf der Fläche stationiert sein. In den gezeigten Ausführungsbeispielen ist die Dockingstation 90 eine Ladestation zum Aufladen des Grünflächenbearbeitungsroboters 60 ausgebildet.

Im Detail weist die Dockingstation 90 den Referenz-Empfänger 95 auf.

Somit weist der Grünflächenbearbeitungsroboter 60 das Roboter-Positionsbestimmungs-System 70 basierend auf Satelliten-Positionsbestimmung und/oder Funk-Positionsbestimmung teilweise, insbesondere den Satelliten-Positionsbestimmungs-Empfänger bzw. GNSS-Empfänger oder Funk-Empfänger bzw. FPB-Empfänger 71 vollständig, auf.

Außerdem weist in den gezeigten Ausführungsbeispielen das Roboter-Positionsbestimmungs-System 70, insbesondere der Grünflächenbearbeitungsroboter 60, einen lokalen Positionsbestimmungs-Empfänger bzw. LPS-Empfänger oder Funk-Empfänger bzw. FPB-Empfänger 75 zum Empfangen von lokalen Signalen, insbesondere lokalen Funk-Signalen, von mindestens einem lokalen Positionsbestimmungs-Station-Sender 99a, 99b, 99c, 99d, 99e, 99f, 99g, 99h, 99i auf, in den gezeigten Ausführungsbeispielen von neun lokalen Positionsbestimmungs-Station-Sendern 99a-i.

Weiter weist das Grünflächenbearbeitungssystem 50, insbesondere das Roboter-Positionsbestimmungs-System 70, den mindestens einen lokalen Positionsbestimmung-Station-Sender 99a-i zum Senden von den lokalen Signalen, insbesondere den lokalen Funk-Signalen, auf, in den gezeigten Ausführungsbeispielen die neun lokalen Positionsbestimmungs-Station-Sender 99a-i. Der mindestens eine lokale Positionsbestimmungs-Station-Sender 99a-i ist an dem Abschnitt 102 des Begrenzungsrands 101 stationiert. Der lokale Positionsbestimmungs-Empfänger bzw. LPS-Empfänger oder Funk-Empfänger bzw. FPB-Empfänger 75 und der mindestens eine lokale Positionsbestimmungs-Station-Sender 99a-i sind dazu ausgebildet, Zusammenzuwirken, insbesondere in Signalverbindung miteinander zu stehen, um die Positionsbestimmung zu ermöglichen.

Im Detail sind die Positionsbestimmungs-Station-Sender 99a-i in Ecken der Fläche 100 stationiert. Somit spannen die Positionsbestimmungs-Station-Sender 99a-i ein LPS (LPS: lokales Positionsbestimmungs-System) auf.

Somit weist der Grünflächenbearbeitungsroboter 60 das Roboter-Positionsbestimmungs-System 70 basierend auf lokaler Positionsbestimmung und/oder Funk-Positionsbestimmung teilweise, insbesondere den lokalen Positionsbestimmungs-Empfänger bzw. LPS-Empfänger oder Funk-Empfänger bzw. FPB-Empfänger 75 vollständig, auf.

Zudem weist in den gezeigten Ausführungsbeispielen der Grünflächenbearbeitungsroboter 60 Vortriebsräder 62 auf.

Des Weiteren weist in den gezeigten Ausführungsbeispielen das Roboter-Positionsbestimmungs-System 70, insbesondere der Grünflächenbearbeitungsroboter 60, ein Odometrie-Positionsbestimmungs-Gerät 79 auf. Das Odometrie-Positionsbestimmungs-Gerät 79 ist zum Zusammenwirken mit den Vortriebsrädern 62 ausgebildet, insbesondere dazu, aus einem jeweiligen Umfang und einer jeweiligen Drehzahl der Vortriebsräder 62 die Positionsbestimmung zu ermöglichen.

Somit weist der Grünflächenbearbeitungsroboter 60 das Roboter-Positionsbestimmungs-System 70 basierend auf Odometrie-Positionsbestimmung, insbesondere vollständig, auf.

Außerdem ist in dem Ausführungsbeispiel gezeigt in Fig. 1 bis 6 die zweite Positionsbestimmungs-Technologie PBT2 Trägheits-Positionsbestimmung IMU, Kamera-Positionsbestimmung KPB, Bild-Positionsbestimmung BPB und/oder Photogrammetrie-Positionsbestimmung PPB. In dem Ausführungsbeispiel gezeigt in Fig. 7 ist die zweite Positionsbestimmungs-Technologie PBT2 Tachymeter-Positionsbestimmung TPB und/oder Lidar-Positionsbestimmung LIPB.

In alternativen Ausführungsbeispielen kann die zweite Positionsbestimmungs-Technologie, insbesondere entweder, Satelliten-Positionsbestimmung, lokale Positionsbestimmung, Funk-Positionsbestimmung, Trägheits-Positionsbestimmung, Odometrie-Positionsbestimmung, Ultraschall-Positionsbestimmung UPB, wie in Fig. 7 angedeutet, Sonografie-Positionsbestimmung SGPB, wie in Fig. 7 angedeutet, Sonar-Positionsbestimmung SPB, wie in Fig. 7 angedeutet, Radar-Positionsbestimmung RPB, wie in Fig. 7 angedeutet, Radargrammetrie-Positionsbestimmung RGPB, wie in Fig. 7 angedeutet, Tachymeter-Positionsbestimmung, Lidar-Positionsbestimmung, Laserscanning-Positionsbestimmung LAPB, wie in Fig. 7 angedeutet, Kamera-Positionsbestimmung, Bild-Positionsbestimmung und/oder Photogrammetrie-Positionsbestimmung sein, wobei die zweite Positionsbestimmungs-Technologie von der ersten Positionsbestimmungs-Technologie verschieden ist.

Weiter weist der Schritt a) auf: Erfassen der Abfolge von Einlern-Positionskoordinaten x2, y2 mittels eines Einlern-Positionsbestimmungs-Systems 11, insbesondere mindestens eines Teils 12 des Einlern-Positionsbestimmungs-Systems 11, insbesondere des vollständigen Einlern-Positionsbestimmungs-Systems 11, an, insbesondere auf, dem Abschnitt 102 und/oder auf der Fläche 100.

Die Definierungseinrichtung 10 weist das Einlern-Positionsbestimmungs-System 11, insbesondere vollständig, auf. Das Einlern-Positionsbestimmungs-System 11 ist zum Erfassen der Abfolge von Einlern-Positionskoordinaten x2, y2 ausgebildet.

In dem Ausführungsbeispiel gezeigt in Fig. 1 bis 6 weist das Einlern-System 1 ein portables, insbesondere und benutzerbetätigbares, Einlern-Gerät 13, insbesondere in Form eines Smartphones, auf. Das Einlern-Gerät 13 weist die Definierungs-Einrichtung 10, insbesondere und die Transformierungs-Einrichtung 20, insbesondere vollständig, auf.

Das Einlern-Gerät 13 bzw. das Einlern-Positionsbestimmungs-System 11 weist mindestens einen Beschleunigungs- und/oder Drehratensensor 14 zum Messen von Beschleunigungen und/oder Drehraten des Einlern-Geräts 13 bzw. des Einlern-Positionsbestimmungs-Systems 11 und zum Integrieren der gemessenen Beschleunigungen und/oder der gemessenen Drehraten auf. Zudem weist das Einlern-Gerät 13 bzw. das Einlern-Positionsbestimmungs-System 11 eine Kamera 15, insbesondere in Form einer Digitalkamera, zum Aufnehmen von Bildern BI des Abschnitts 102 des Begrenzungsrands 101, insbesondere aus verschiedenen Positionen P11, P13, auf. Des Weiteren weist das Einlern-Gerät 13 bzw. das Einlern-Positionsbestimmungs-System 11 eine Bild- und/oder Photogrammetrie-Positionsbestimmungs-Einrichtung 16 zum Auswerten der mittels der Kamera 15 aufgenommenen Bilder BI zum Ermöglichen der Positionsbestimmung auf.

Im Detail weist das Erfassen der Abfolge von Einlern-Positionskoordinaten x2, y2 das Aufnehmen der Bilder BI des Abschnitts 102 des Begrenzungsrands 101, insbesondere aus verschiedenen Positionen P11, P13, auf.

Insbesondere werden die aufgenommenen Bilder Bl, insbesondere jeweils, auf einem Ausgabegerät 17, insbesondere einer Anzeige, insbesondere in Form eines Touchscreens, des Einlern-Geräts 13 bzw. des Einlern-Positionsbestimmungs-Systems 11 ausgegeben, insbesondere angezeigt.

Außerdem weist das Erfassen der Abfolge von Einlern-Positionskoordinaten x2, y2 ein Referenzieren, insbesondere mit einem Markierungssymbol MS, in einem jeweiligen Bild BI der aufgenommenen Bilder BI mindestens eines Bildpunkts als Begrenzungsrandbildpunkt auf.

Insbesondere erfolgt das Referenzieren automatisch, insbesondere mittels Bilderkennung, und/oder durch den Benutzer, insbesondere mittels eines Eingabegeräts 18, insbesondere in Form des Touchscreens, des Einlern-Geräts 13 bzw. des Einlern-Positionsbestimmungs-Systems 11.

Weiter weist das Erfassen der Abfolge von Einlern-Positionskoordinaten x2, y2 ein Ermitteln der Abfolge von Einlern-Positionskoordinaten x2, y2 basierend auf den Begrenzungsrandbildpunkten auf, insbesondere mittels Photogrammetrie.

Insbesondere werden die verschiedenen Positionen P11, P13 durch ein translatorisches Bewegen des Einlern-Geräts 13 bzw. des Einlern-Positionsbestimmungs-Systems 11, insbesondere der Kamera 15, erreicht, insbesondere läuft der Benutzer auf der Fläche 100 herum.

Zudem wird das translatorische Bewegen des Einlern-Geräts 13 bzw. des Einlern-Positionsbestimmungs-Systems 11, insbesondere der Kamera 15, mittels des mindestens einen Beschleunigungs- und/oder Drehratensensors 14 erfasst. Das erfasste translatorische Bewegen fließt beim Ermitteln der Abfolge von Einlern-Positionskoordinaten x2, y2 basierend auf den Begrenzungsrandbildpunkten mit ein. Dies kann auf Englisch als optical flow bezeichnet werden.

Insbesondere sind der mindestens eine Beschleunigungs- und/oder Drehratensensor 14, die Kamera 15 und die Bild- und/oder Photogrammetrie-Positionsbestimmungs-Einrichtung 16 dazu ausgebildet, Zusammenzuwirken um die Positionsbestimmung zu ermöglichen.

In dem Ausführungsbeispiel gezeigt in Fig. 7 weist das Teil 12 einen Reflektor 19 zum Reflektieren von Licht von einem Tachymeter- und/oder Lidar-Positionsbestimmungs-Sender-Empfänger des Einlern-Positionsbestimmungs-Systems 11, insbesondere an dem Abschnitt 102 und/oder auf der Fläche 100, auf.

Insbesondere sind das Teil 12, insbesondere der Reflektor 19, und der Tachymeter- und/oder Lidar-Positionsbestimmungs-Sender-Empfänger dazu ausgebildet, Zusammenzuwirken um die Positionsbestimmung zu ermöglichen.

Im Detail weist der Schritt a) auf: Führen des mindestens einen Teils 12, insbesondere des Reflektors 19, des Einlern-Positionsbestimmungs-Systems 11 entlang mindestens des Abschnitts 12, insbesondere durch den Benutzer, und Erfassen von, insbesondere den, Einlern-Positionskoordinaten des mindestens einen Teils 12, insbesondere des Reflektors 19, während des Führens.

In dem Ausführungsbeispiel gezeigt in Fig. 7 ist das das Teil 12 ein portables, insbesondere bodengeführtes, Händler-Gerät, insbesondere mit denselben Abmessungen wie der Grünflächenbearbeitungsroboter 60.

Insbesondere ist der Reflektor 19 zentral und/oder punktsymmetrisch auf dem Teil 12 angeordnet. Des Weiteren weist das Teil 12 ein Kardan-Gelenk auf, insbesondere um ein Schieben wie eines Staubsaugers zu ermöglichen. Außerdem entspricht ein innerer Radius einer Breite eines Rasenmähwerkzeugs des Grünflächenbearbeitungsroboters 60, insbesondere um ein Einlernen von ebenen Übergängen zu ermöglichen. Weiter entspricht ein äußerer Radius einer Breite des Grünflächenbearbeitungsroboters 60, insbesondere um ein Einlernen von festen Hindernissen zu ermöglichen.

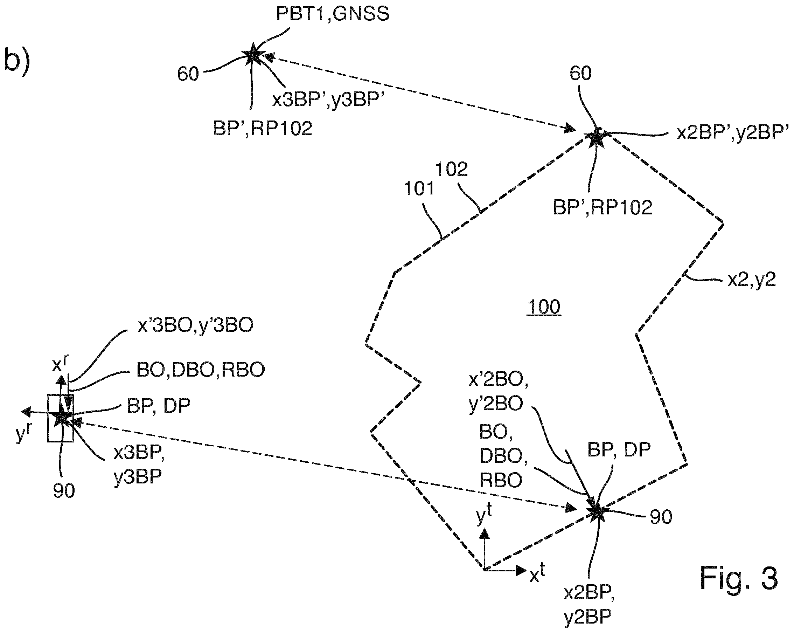

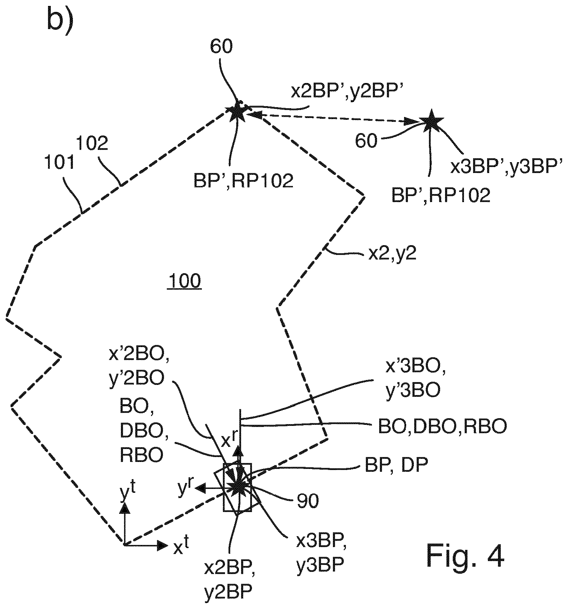

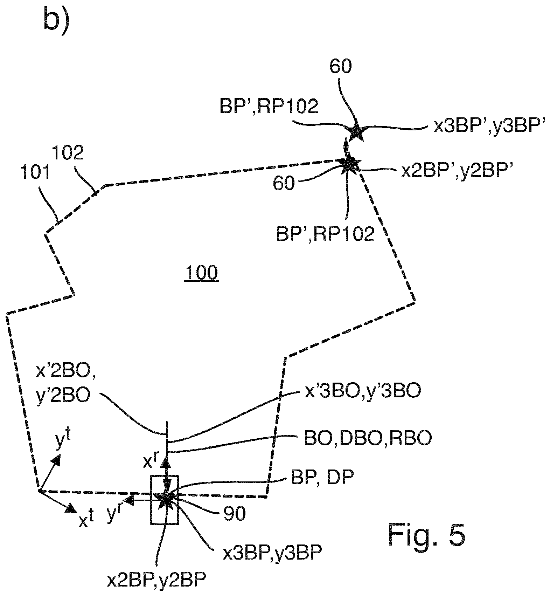

Zudem weist der Schritt b) auf: Verschieben, insbesondere wie in Fig. 3 gezeigt, Drehen, insbesondere wie in Fig. 4 gezeigt, und/oder Skalieren, insbesondere wie in Fig. 5 gezeigt und/oder falls erforderlich.

Im Detail wird die definierte Abfolge von Einlern-Positionskoordinaten x2, y2 verschoben. Des Weiteren wird die verschobene Abfolge von Einlern-Positionskoordinaten x2, y2 gedreht. Außerdem wird die verschobene und gedrehte Abfolge von Einlern-Positionskoordinaten x2, y2 skaliert, insbesondere falls erforderlich.

Weiter weist das Verfahren den Schritt auf: Kennzeichnen von Bezugspunkt-Einlern-Positionskoordinaten x2BP, y2BP in Bezug auf, in den gezeigten Ausführungsbeispielen der, Abfolge von Einlern-Positionskoordinaten x2, y2. Zudem weist das Verfahren den Schritt auf: Kennzeichnen von Bezugspunkt-Transformations-Roboter-Positionskoordinaten x3BP, y3BP in Bezug für die Abfolge von Transformations-Roboter-Positionskoordinaten x3, y3. Der Schritt b) weist auf: Transformieren unter Erfüllung der Bedingung, dass die gekennzeichneten Bezugspunkt-Einlern-Positionskoordinaten x2BP, y2BP und die gekennzeichneten Bezugspunkt-Transformations-Roboter-Positionskoordinaten x3BP, y3BP einen selben Bezugspunkt BP kennzeichnen.

Das Einlern-System 1 weist eine Kennzeichnungs-Einrichtung 30 auf. Die Kennzeichnungs-Einrichtung 30 ist zum Kennzeichnen von den Bezugspunkt-Einlern-Positionskoordinaten x2BP, y2BP in Bezug auf die Abfolge von Einlern-Positionskoordinaten x2, y2 und zum Kennzeichnen von den Bezugspunkt-Transformations-Roboter-Positionskoordinaten x3BP, y3BP in Bezug für die Abfolge von Transformations-Roboter-Positionskoordinaten x3, y3 ausgebildet. Die Transformierungs-Einrichtung 20 ist zum Transformieren unter Erfüllung der Bedingung, dass die gekennzeichneten Bezugspunkt-Einlern-Positionskoordinaten x2BP, y2BP und die gekennzeichneten Bezugspunkt-Transformations-Roboter-Positionskoordinaten x3BP, y3BP denselben Bezugspunkt BP kennzeichnen, ausgebildet.

Zudem weist das Verfahren den Schritt auf: Kennzeichnen von weiteren Bezugspunkt-Einlern-Positionskoordinaten x2BP`, y2BP` in Bezug auf die, in den gezeigten Ausführungsbeispielen der, Abfolge von Einlern-Positionskoordinaten x2, y2, insbesondere mittels der Kennzeichnungs-Einrichtung 30. Des Weiteren weist das Verfahren den Schritt auf: Kennzeichnen von weiteren Bezugspunkt-Transformations-Roboter-Positionskoordinaten x3BP`, y3BP` in Bezug für die Abfolge von Transformations-Roboter-Positionskoordinaten x3, y3, insbesondere mittels der Kennzeichnungs-Einrichtung 30. Der Schritt b) weist auf: Transformieren unter Erfüllung der Bedingung, dass die gekennzeichneten weiteren Bezugspunkt-Einlern-Positionskoordinaten x2BP`, y2BP` und die gekennzeichneten weiteren Bezugspunkt-Transformations-Roboter-Positionskoordinaten x3BP`, y3BP` einen selben weiteren Bezugspunkt BP` kennzeichnen, insbesondere mittels der Transformierungs-Einrichtung 20.

Zusätzlich weist das Verfahren den Schritt auf: Kennzeichnen einer Einlern-Orientierung x'2BO, y'2BO an den, insbesondere gekennzeichneten, Bezugspunkt-Einlern-Positionskoordinaten x2BP, y2BP in Bezug auf die Abfolge von Einlern-Positionskoordinaten x2, y2, insbesondere mittels der Kennzeichnungs-Einrichtung 30. Des Weiteren weist das Verfahren den Schritt auf: Kennzeichnen einer Transformations-Roboter-Orientierung x'3BO, y'3BO an den, insbesondere gekennzeichneten, Bezugspunkt-Transformations-Roboter-Positionskoordinaten x3BP, y3BP in Bezug für die Abfolge von Transformations-Roboter-Positionskoordinaten x3, y3, insbesondere mittels der Kennzeichnungs-Einrichtung 30. Der Schritt b) weist auf: Transformieren unter Erfüllung der Bedingung, dass die gekennzeichnete Einlern-Orientierung x'2BO, y'2BO und die gekennzeichnete Transformations-Roboter-Orientierung x'3BO, y'3BO eine selbe Bezugsorientierung BO an dem Bezugspunkt BP kennzeichnen, insbesondere mittels der Transformierungs-Einrichtung 20.

In alternativen Ausführungsbeispielen kann das Transformieren unter Erfüllung der Bedingung entweder desselben weiteren Bezugspunkts oder derselben Bezugsorientierung erfolgen.

In den gezeigten Ausführungsbeispielen ist der Bezugspunkt BP durch eine Dockingstations-Position DP der Dockingstation 90 für den Grünflächenbearbeitungsroboter 60 gekennzeichnet.

Der weitere Bezugspunkt BP` ist durch eine, insbesondere von der Dockingstations-Position DP verschiedene, Roboter-Position RP102 des Grünflächenbearbeitungsroboters 60, in den gezeigten Ausführungsbeispielen an dem Abschnitt 102, gekennzeichnet. In alternativen Ausführungsbeispielen kann der weitere Bezugspunkt durch eine Roboter-Position des Grünflächenbearbeitungsroboters innerhalb des Begrenzungsrands bzw. auf der Fläche gekennzeichnet sein.

Im Detail wird die, insbesondere von der Dockingstations-Position DP verschiedene, Roboter-Position RP102 für den weiteren Bezugspunkt BP` mittels Bewegens des Grünflächenbearbeitungsroboters 60, insbesondere gesteuert durch den Benutzer, erreicht.

Die Bezugsorientierung BO ist durch eine Dockingstations-Orientierung DBO der Dockingstation 90 und/oder durch eine Roboter-Orientierung RBO des Grünflächenbearbeitungsroboters 60, in den gezeigten Ausführungsbeispielen an dem Abschnitt 102, gekennzeichnet, insbesondere falls der Grünflächenbearbeitungsroboter 60 an der Dockingstation 90 angedockt ist. In alternativen Ausführungsbeispielen kann die Bezugsorientierung durch eine Dockingstations-Orientierung der Dockingstation und/oder durch eine Roboter-Orientierung des Grünflächenbearbeitungsroboters innerhalb des Begrenzungsrands bzw. auf der Fläche gekennzeichnet sein.

Im Detail ist die Dockingstation 90 mit der Dockingstations-Orientierung DBO an dem Abschnitt 102 orthogonal zu diesem positioniert. Der Grünflächenbearbeitungsroboter 60 ist mit der Roboter-Orientierung RBO an dem Abschnitt 102 orthogonal zu diesem positioniert, insbesondere falls der Grünflächenbearbeitungsroboter 60 an der Dockingstation 90 angedockt ist. In alternativen Ausführungsbeispielen kann die Dockingstation mit der Dockingstations-Orientierung an dem Abschnitt oder innerhalb des Begrenzungsrands bzw. auf der Fläche orthogonal oder parallel oder schräg zu diesem positioniert sein. Zusätzlich oder alternativ kann in alternativen Ausführungsbeispielen der Grünflächenbearbeitungsroboter mit der Roboter-Orientierung an dem Abschnitt oder innerhalb des Begrenzungsrands bzw. auf der Fläche orthogonal oder parallel oder schräg zu diesem positioniert sein.

In dem Ausführungsbeispiel gezeigt in Fig. 1 bis 6 weist das Einlern-Gerät 13 die Kennzeichnungs-Einrichtung 30, insbesondere vollständig, auf.

Insbesondere erfolgt das Kennzeichnen der Bezugspunkt-Einlern-Positionskoordinaten x2BP, y2BP, der Bezugspunkt-Transformations-Roboter-Positionskoordinaten x3BP, y3BP, der weiteren Bezugspunkt-Einlern-Positionskoordinaten x2BP', y2BP', der weiteren Bezugspunkt-Transformations-Roboter-Positionskoordinaten x3BP', y3BP', der Einlern-Orientierung x'2BO, y'2BO und/oder der Transformations-Roboter-Orientierung x'3BO, y'3BO automatisch, insbesondere mittels Bilderkennung, und/oder durch den Benutzer, insbesondere mittels des Eingabegeräts 18, insbesondere in Form des Touchscreens, des Einlern-Geräts 13.

Die Kennzeichnungs-Einrichtung 30, das Einlern-Positionsbestimmungs-System 11 und das Roboter-Positionsbestimmungs-System 70 sind dazu ausgebildet, Zusammenzuwirken um das Kennzeichnen zu ermöglichen. Des Weiteren sind die Kennzeichnungs-Einrichtung und die Transformierungs-Einrichtung 20 dazu ausgebildet, Zusammenzuwirken um das Transformieren zu ermöglichen.

Wie die gezeigten und oben erläuterten Ausführungsbeispiele deutlich machen, stellt die Erfindung ein vorteilhaftes Verfahren und ein vorteilhaftes Einlern-System zum Einlernen mindestens eines Abschnitts eines Begrenzungsrands einer Fläche für ein Grünflächenbearbeitungssystem bereit, das jeweils verbesserte Eigenschaften aufweist. Des Weiteren stellt die Erfindung ein vorteilhaftes Verfahren zum Betreiben eines Grünflächenbearbeitungssystems aufweisend ein solches Verfahren zum Einlernen und ein vorteilhaftes Grünflächenbearbeitungssystem aufweisend ein solches Einlern-System bereit.

## Patentansprüche

1. Verfahren zum Einlernen mindestens eines Abschnitts (102) eines Begrenzungsrands (101) einer Fläche (100) für ein Grünflächenbearbeitungssystem (50), wobei das Grünflächenbearbeitungssystem (1) aufweist:
- einen autonomen mobilen Grünflächenbearbeitungsroboter (60), und
- ein Roboter-Positionsbestimmungs-System (70), wobei das Roboter-Positionsbestimmungs-System (70) zum Erfassen von Roboter-Positionskoordinaten (x1, y1) des Grünflächenbearbeitungsroboters (60) ausgebildet ist, wobei die Roboter-Positionskoordinaten (x1, y1) auf einer ersten Positionsbestimmungs-Technologie (PBT1) basieren,
**dadurch gekennzeichnet, dass** das Verfahren die Schritte aufweist:
a) Definieren einer Abfolge von Einlern-Positionskoordinaten (x2, y2) des Abschnitts (102), wobei die Einlern-Positionskoordinaten (x2, y2) auf einer von der ersten Positionsbestimmungs-Technologie (PBT1) verschiedenen, zweiten Positionsbestimmungs-Technologie (PBT2) basieren, und
b) Transformieren der definierten Abfolge von Einlern-Positionskoordinaten (x2, y2) in eine Abfolge von Transformations-Roboter-Positionskoordinaten (x3, y3), wobei die Transformations-Roboter-Positionskoordinaten (x3, y3) auf der ersten Positionsbestimmungs-Technologie (PBT1) basieren.

2. Verfahren nach Anspruch 1,
- wobei die erste Positionsbestimmungs-Technologie (PBT1) oder die zweite Positionsbestimmungs-Technologie (PBT2) Satelliten-Positionsbestimmung (GNSS), lokale Positionsbestimmung (LPS), Funk-Positionsbestimmung (FPB), Trägheits-Positionsbestimmung (IMU), Odometrie-Positionsbestimmung (OPB), Ultraschall-Positionsbestimmung (UPB), Sonografie-Positionsbestimmung (SGPB), Sonar-Positionsbestimmung (SPB), Radar-Positionsbestimmung (RPB), Radargrammetrie-Positionsbestimmung (RGPB), Tachymeter-Positionsbestimmung (TPB), Lidar-Positionsbestimmung (LIPB), Laserscanning-Positionsbestimmung (LAPB), Kamera-Positionsbestimmung (KPB), Bild-Positionsbestimmung (BPB) und/oder Photogrammetrie-Positionsbestimmung (PPB) ist.

3. Verfahren nach einem der vorhergehenden Ansprüche,
- wobei der Schritt a) aufweist: Erfassen der Abfolge von Einlern-Positionskoordinaten (x2, y2) mittels eines Einlern-Positionsbestimmungs-Systems (11), insbesondere mindestens eines Teils (12) des Einlern-Positionsbestimmungs-Systems (11) an dem Abschnitt (102) und/oder auf der Fläche (100).

4. Verfahren nach Anspruch 3,
- wobei der Schritt a) aufweist: Führen des mindestens einen Teils (12) des Einlern-Positionsbestimmungs-Systems (11) entlang mindestens des Abschnitts (102) und Erfassen von Einlern-Positionskoordinaten (x2, y2) des mindestens einen Teils (12) während des Führens.

5. Verfahren nach einem der vorhergehenden Ansprüche,
- wobei der Schritt b) aufweist: Verschieben, Drehen und/oder Skalieren.

6. Verfahren nach einem der vorhergehenden Ansprüche,
- wobei das Verfahren den Schritt aufweist: Kennzeichnen von Bezugspunkt-Einlern-Positionskoordinaten (x2BP, y2BP) in Bezug auf die Abfolge von Einlern-Positionskoordinaten (x2, y2),
- wobei das Verfahren den Schritt aufweist: Kennzeichnen von Bezugspunkt-Transformations-Roboter-Positionskoordinaten (x3BP, y3BP) in Bezug für die Abfolge von Transformations-Roboter-Positionskoordinaten (x3, y3), und
- wobei der Schritt b) aufweist: Transformieren unter Erfüllung der Bedingung, dass die gekennzeichneten Bezugspunkt-Einlern-Positionskoordinaten (x2BP, y2BP) und die gekennzeichneten Bezugspunkt-Transformations-Roboter-Positionskoordinaten (x3BP, y3BP) einen selben Bezugspunkt (BP) kennzeichnen.

7. Verfahren nach Anspruch 6,
- wobei das Verfahren den Schritt aufweist: Kennzeichnen von weiteren Bezugspunkt-Einlern-Positionskoordinaten (x2BP', y2BP') in Bezug auf die Abfolge von Einlern-Positionskoordinaten (x2, y2), wobei das Verfahren den Schritt aufweist: Kennzeichnen von weiteren Bezugspunkt-Transformations-Roboter-Positionskoordinaten (x3BP', y3BP') in Bezug für die Abfolge von Transformations-Roboter-Positionskoordinaten (x3, y3), und wobei der Schritt b) aufweist: Transformieren unter Erfüllung der Bedingung, dass die gekennzeichneten weiteren Bezugspunkt-Einlern-Positionskoordinaten (x2BP', y2BP') und die gekennzeichneten weiteren Bezugspunkt-Transformations-Roboter-Positionskoordinaten (x3BP', y3BP') einen selben weiteren Bezugspunkt (BP') kennzeichnen, und/oder
- wobei das Verfahren den Schritt aufweist: Kennzeichnen einer Einlern-Orientierung (x'2BO, y'2BO) an den Bezugspunkt-Einlern-Positionskoordinaten (x2BP, y2BP) in Bezug auf die Abfolge von Einlern-Positionskoordinaten (x2, y2), wobei das Verfahren den Schritt aufweist: Kennzeichnen einer Transformations-Roboter-Orientierung (x'3BO, y'3BO) an den Bezugspunkt-Transformations-Roboter-Positionskoordinaten (x3BP, y3BP) in Bezug für die Abfolge von Transformations-Roboter-Positionskoordinaten (x3, y3), und wobei der Schritt b) aufweist: Transformieren unter Erfüllung der Bedingung, dass die gekennzeichnete Einlern-Orientierung (x'2BO, y'2BO) und die gekennzeichnete Transformations-Roboter-Orientierung (x'3BO, y'3BO) eines selbe Bezugsorientierung (BO) an dem Bezugspunkt (BP) kennzeichnen.

8. Verfahren nach Anspruch 6 oder 7,
- wobei der, insbesondere weitere, Bezugspunkt (BP, BP') durch eine Dockingstations-Position (DP) einer Dockingstation (90) für den Grünflächenbearbeitungsroboter (60) und/oder durch eine, insbesondere von der Dockingstations-Position (DP) verschiedene, Roboter-Position (RP102) des Grünflächenbearbeitungsroboters (60) gekennzeichnet ist, insbesondere und wobei die Bezugsorientierung (BO) durch eine Dockingstations-Orientierung (DBO) der Dockingstation (90) und/oder durch eine Roboter-Orientierung (RBO) des Grünflächenbearbeitungsroboters (60) gekennzeichnet ist.

9. Verfahren zum Betreiben eines Grünflächenbearbeitungssystems (50), wobei das Grünflächenbearbeitungssystem (50) aufweist:
- einen autonomen mobilen Grünflächenbearbeitungsroboter (60),
- ein Roboter-Positionsbestimmungs-System (70), wobei das Roboter-Positionsbestimmungs-System (70) zum Erfassen von Roboter-Positionskoordinaten (x1, y1) des Grünflächenbearbeitungsroboters (60) ausgebildet ist, wobei die Roboter-Positionskoordinaten (x1, y1) auf einer ersten Positionsbestimmungs-Technologie (PBT1) basieren, und
- ein Vergleichs- und Steuersystem (80), wobei das Vergleichs- und Steuersystem (80) zum Vergleichen der erfassten Roboter-Positionskoordinaten (x1, y1) mit einer Abfolge von Transformations-Roboter-Positionskoordinaten (x3, y3) und zum Steuern eines Bewegens des Grünflächenbearbeitungsroboters (60) in Abhängigkeit von einem Ergebnis des Vergleichs ausgebildet ist, wobei die Transformations-Roboter-Positionskoordinaten (x3, y3) auf der ersten Positionsbestimmungs-Technologie (PBT1) basieren,
- wobei das Verfahren aufweist: ein Verfahren nach einem der vorhergehenden Ansprüche zum Einlernen mindestens eines Abschnitts (102) eines Begrenzungsrands (101) einer Fläche (100), und
wobei das Verfahren die Schritte aufweist:
- Erfassen von Roboter-Positionskoordinaten (x1, y1) des Grünflächenbearbeitungsroboters (60) mittels des Roboter-Positionsbestimmungs-Systems (70),
- Vergleichen der erfassten Roboter-Positionskoordinaten (x1, y1) mit der Abfolge von Transformations-Roboter-Positionskoordinaten (x3, y3) mittels des Vergleichs- und Steuersystems (80), und
- Steuern des Bewegens des Grünflächenbearbeitungsroboters (60) in Abhängigkeit von dem Ergebnis des Vergleichs mittels des Vergleichs- und Steuersystems (80).

10. Verfahren nach Anspruch 9,
- wobei der Grünflächenbearbeitungsroboter (60) das Roboter-Positionsbestimmungs-System (70) aufweist.

11. Verfahren nach Anspruch 9 oder 10,
- wobei der Grünflächenbearbeitungsroboter (60) als ein Rasenmähroboter (61) ausgebildet ist.

12. Einlern-System (1) zum Einlernen mindestens eines Abschnitts (102) eines Begrenzungsrands (101) einer Fläche (100) für ein Grünflächenbearbeitungssystem (50), wobei das Grünflächenbearbeitungssystem (50) aufweist:
- einen autonomen mobilen Grünflächenbearbeitungsroboter (60), und
- ein Roboter-Positionsbestimmungs-System (70), wobei das Roboter-Positionsbestimmungs-System (70) zum Erfassen von Roboter-Positionskoordinaten (x1, y1) des Grünflächenbearbeitungsroboters (60) ausgebildet ist, wobei die Roboter-Positionskoordinaten (x1, y1) auf einer ersten Positionsbestimmungs-Technologie (PBT1) basieren,
**dadurch gekennzeichnet, dass** das Einlern-System (1) aufweist:
- eine Definierungs-Einrichtung (10), wobei die Definierungs-Einrichtung (10) zum Definieren einer Abfolge von Einlern-Positionskoordinaten (x2, y2) des Abschnitts (102) ausgebildet ist, wobei die Einlern-Positionskoordinaten (x2, y2) auf einer von der ersten Positionsbestimmungs-Technologie (PBT1) verschiedenen, zweiten Positionsbestimmungs-Technologie (PBT2) basieren, und
- eine Transformierungs-Einrichtung (20), wobei die Transformierungs-Einrichtung (20) zum Transformieren der definierten Abfolge von Einlern-Positionskoordinaten (x2, y2) in eine Abfolge von Transformations-Roboter-Positionskoordinaten (x3, y3) ausgebildet ist, wobei die Transformations-Roboter-Positionskoordinaten (x3, y3) auf der ersten Positionsbestimmungs-Technologie (PBT1) basieren.

13. Einlern-System (1) nach Anspruch 12,
- wobei die Definierungs-Einrichtung (10) aufweist: ein Einlern-Positionsbestimmungs-System (11), wobei das Einlern-Positionsbestimmungs-System (11) zum Erfassen der Abfolge von Einlern-Positionskoordinaten (x2, y2) ausgebildet ist.

14. Einlern-System (1) nach Anspruch 12 oder 13,
- wobei das Einlern-System (1) aufweist: eine Kennzeichnungs-Einrichtung (30), wobei die Kennzeichnungs-Einrichtung (30) zum Kennzeichnen von Bezugspunkt-Einlern-Positionskoordinaten (x2BP, y2BP) in Bezug auf die Abfolge von Einlern-Positionskoordinaten (x2, y2) und zum Kennzeichnen von Bezugspunkt-Transformations-Roboter-Positionskoordinaten (x3BP, y3BP) in Bezug für die Abfolge von Transformations-Roboter-Positionskoordinaten (x3, y3) ausgebildet ist, und
- wobei die Transformierungs-Einrichtung (20) zum Transformieren unter Erfüllung der Bedingung, dass die gekennzeichneten Bezugspunkt-Einlern-Positionskoordinaten (x2BP, y2BP) und die gekennzeichneten Bezugspunkt-Transformations-Roboter-Positionskoordinaten (x3BP, y3BP) einen selben Bezugspunkt (BP) kennzeichnen, ausgebildet ist.

15. Grünflächenbearbeitungssystem (50), wobei das Grünflächenbearbeitungssystem (50) aufweist:
- ein Einlern-System (1) nach einem der Ansprüche 12 bis 14,
- einen autonomen mobilen Grünflächenbearbeitungsroboter (60),
- ein Roboter-Positionsbestimmungs-System (70), wobei das Roboter-Positionsbestimmungs-System (70) zum Erfassen von Roboter-Positionskoordinaten (x1, y1) des Grünflächenbearbeitungsroboters (60) ausgebildet ist, wobei die Roboter-Positionskoordinaten (x1, y1) auf einer ersten Positionsbestimmungs-Technologie (PBT1) basieren, und
- ein Vergleichs- und Steuersystem (80), wobei das Vergleichs- und Steuersystem (80) zum Vergleichen der erfassten Roboter-Positionskoordinaten (x1, y1) mit einer Abfolge von Transformations-Roboter-Positionskoordinaten (x3, y3) und zum Steuern eines Bewegens des Grünflächenbearbeitungsroboters (60) in Abhängigkeit von einem Ergebnis des Vergleichs ausgebildet ist, wobei die Transformations-Roboter-Positionskoordinaten (x3, y3) auf der ersten Positionsbestimmungs-Technologie (PBT1) basieren.

## Claims

1. Method for teaching at least one section (102) of a delimiting border (101) of a land area (100) for a green area maintenance system (50), wherein the green area maintenance system (1) comprises:
- an autonomous mobile green area maintenance robot (60), and
- a robot position determining system (70), wherein the robot position determining system (70) is designed to detect robot position coordinates (x1, y1) of the green area maintenance robot (60), wherein the robot position coordinates (x1, y1) are based on a first position determining technology (PBT1),
**characterised in that** the method comprises the steps:
(a) defining a sequence of teach-in position coordinates (x2, y2) of the section (102), the teach-in position coordinates (x2, y2) being based on a second position determining technology (PBT2) different from the first position determining technology (PBT1), and
(b) transforming the defined sequence of teach-in position coordinates (x2, y2) into a sequence of transformation robot position coordinates (x3, y3), the transformation robot position coordinates (x3, y3) being based on the first position determining technology (PBT1).

2. Method according to Claim 1,
- wherein the first position determining technology (PBT1) or the second position determining technology (PBT2) is satellite-based position determining (GNSS), local position determining (LPS), radio position determining (FPB), inertial position determining (IMU), odometry position determining (OBB), ultrasonic position determining (UPB), sonographic position determining (SGPB), sonar position determining (SPB), radar position determining (RPB), radargrammetric position determining (RGPB), tachymeter position determining (TPB), lidar position determining (LIPB), laser-scanning position determining (LAPB), camera position determining (KPB), image-based position determining (BPB) and/or photogrammetric position determining (PPB).

3. Method according to any one of the preceding claims,
- wherein step a) comprises: detecting the sequence of teach-in position coordinates (x2, y2) by means of a teach-in position determining system (11), in particular at least one part (12) of the teach-in position determining system (11), at the section (102) and/or on the land area (100).

4. Method according to Claim 3,
- wherein step a) comprises: guiding the at least one part (12) of the teach-in position determining system (11) along at least the section (102) and detecting teach-in position coordinates (x2, y2) of the at least one part (12) during the guiding.

5. Method according to any one of the preceding claims,
- wherein step b) comprises: translation, rotation, and/or scaling.

6. Method according to any one of the preceding claims,
- wherein the method comprises the step: identifying reference-point teach-in position coordinates (x2BP, y2BP) with respect to the sequence of teach-in position coordinates (x2, y2),
- wherein the method comprises the step: identifying reference-point transformation robot position coordinates (x3BP, y3BP) with respect to the sequence of transformation robot position coordinates (x3, y3), and
- wherein step b) comprises: transforming subject to the condition that the identified reference-point teach-in position coordinates (x2BP, y2BP) and the identified reference-point transformation robot position coordinates (x3BP, y3BP) identify the same reference point (BP).

7. Method according to Claim 6,
- wherein the method comprises the step: identifying additional reference-point teach-in position coordinates (x2BP', y2BP') with respect to the sequence of teach-in position coordinates (x2, y2), wherein the method comprises the step: identifying additional reference-point transformation robot position coordinates (x3BP', y3BP') with respect to the sequence of transformation robot position coordinates (x3, y3), and wherein step b) comprises: transforming subject to the condition that the identified additional reference-point teach-in position coordinates (x2BP', y2BP') and the identified additional reference-point transformation robot position coordinates (x3BP', y3BP') identify the same additional reference point (BP'), and/or
- wherein the method comprises the step: identifying a teach-in orientation (x'2BO, y'2BO) at the reference-point teach-in position coordinates (x2BP, y2BP) with respect to the sequence of teach-in position coordinates (x2, y2), wherein the method comprises the step: identifying a transformation robot orientation (x'3BO, y'3BO) at the reference-point transformation robot position coordinates (x3BP, y3BP) with respect to the sequence of transformation robot position coordinates (x3, y3), and wherein step b) comprises: transforming subject to the condition that the identified teach-in orientation (x'2BO, y'2BO) and the identified transformation robot orientation (x'3BO, y'3BO) identify the same reference orientation (BO) at the reference point (BP).

8. Method according to Claim 6 or 7,
- wherein the, in particular additional, reference point (BP, BP'), is **characterized by** a docking station position (DP) of a docking station (90) for the green area maintenance robot (60) and/or by a robot position (RP102), in particular different from the docking station position (DP), of the green area maintenance robot (60), in particular and wherein the reference orientation (BO) is **characterized by** a docking station orientation (DBO) of the docking station (90) and/or by a robot orientation (RBO) of the green area maintenance robot (60).

9. Method for operating a green area maintenance system (50), wherein the green area maintenance system (50) has:
- an autonomous mobile green area maintenance robot (60),
- a robot position determining system (70), wherein the robot position determining system (70) is designed to detect robot position coordinates (x1, y1) of the green area maintenance robot (60), wherein the robot position coordinates (x1, y1) are based on a first position determining technology (PBT1), and
- a comparison and control system (80), wherein the comparison and control system (80) is designed to compare the detected robot position coordinates (x1, y1) with a sequence of transformation robot position coordinates (x3, y3) and to control a movement of the green area maintenance robot (60) depending on a result of the comparison, the transformation robot position coordinates (x3, y3) being based on the first position determining technology (PBT1),
- wherein the method comprises: a method according to any one of the preceding claims for teaching at least one section (102) of a delimiting border (101) of a land area (100), and
wherein the method comprises the steps:
- detecting robot position coordinates (x1, y1) of the green area maintenance robot (60) by means of the robot position determining system (70),
- comparing the detected robot position coordinates (x1, y1) with the sequence of transformation robot position coordinates (x3, y3) using the comparison and control system (80), and
- controlling the movement of the green area maintenance robot (60) depending on the result of the comparison using the comparison and control system (80).

10. Method according to Claim 9,
- wherein the green area maintenance robot (60) comprises the robot position determining system (70) .

11. Method according to Claim 9 or 10,
- wherein the green area maintenance robot (60) is designed as a lawnmower robot (61).

12. Teach-in system (1) for teaching at least one section (102) of a delimiting border (101) of a land area (100) for a green area maintenance system (50), wherein the green area maintenance system (50) comprises:
- an autonomous mobile green area maintenance robot (60), and
- a robot position determining system (70), wherein the robot position determining system (70) is designed to detect robot position coordinates (x1, y1) of the green area maintenance robot (60), wherein the robot position coordinates (x1, y1) are based on a first position determining technology (PBT1),
**characterised in that** the teach-in system (1) comprises:
- a definition device (10), wherein the definition device (10) is designed to define a sequence of teach-in position coordinates (x2, y2) of the section (102), the teach-in position coordinates (x2, y2) being based on a second position determining technology (PBT2) different from the first position determining technology (PBT1), and
- a transformation device (20), wherein the transformation device (20) is designed to transform the defined sequence of teach-in position coordinates (x2, y2) into a sequence of transformation robot position coordinates (x3, y3), the transformation robot position coordinates (x3, y3) being based on the first position determining technology (PBT1).

13. Teach-in system (1) according to Claim 12,
- wherein the definition device (10) comprises: a teach-in position determining system (11), wherein the teach-in position determining system (11) is designed to detect the sequence of teach-in position coordinates (x2, y2).

14. Teach-in system (1) according to Claim 12 or 13,
- wherein the teach-in system (1) comprises: an identification device (30), wherein the identification device (30) is designed to identify reference-point teach-in position coordinates (x2BP, y2BP) with respect to the sequence of teach-in position coordinates (x2, y2) and to identify reference-point transformation robot position coordinates (x3BP, y3BP) with respect to the sequence of transformation robot position coordinates (x3, y3), and
- wherein the transformation device (20) is designed for transforming subject to the condition that the identified reference-point teach-in position coordinates (x2BP, y2BP) and the identified reference-point transformation robot position coordinates (x3BP, y3BP) identify the same reference point (BP).

15. Green area maintenance system (50), wherein the green area maintenance system (50) has:
- a teach-in system (1) according to any one of Claims 12 to 14,
- an autonomous mobile green area maintenance robot (60),
- a robot position determining system (70), wherein the robot position determining system (70) is designed to detect robot position coordinates (x1, y1) of the green area maintenance robot (60), wherein the robot position coordinates (x1, y1) are based on a first position determining technology (PBT1), and
- a comparison and control system (80), wherein the comparison and control system (80) is designed to compare the detected robot position coordinates (x1, y1) with a sequence of transformation robot position coordinates (x3, y3) and to control a movement of the green area maintenance robot (60) depending on a result of the comparison, the transformation robot position coordinates (x3, y3) being based on the first position determining technology (PBT1).

## Revendications

1. Procédé permettant d'apprendre au moins un tronçon (102) d'un bord de délimitation (101) d'une surface (100) pour un système de traitement d'espace vert (50), le système de traitement d'espace vert (1) présentant :
- un robot de traitement d'espace vert (60) mobile et autonome, et
- un système de localisation de robot (70), le système de localisation de robot (70) étant réalisé pour saisir des coordonnées de position de robot (x1, y1) du robot de traitement d'espace vert (60), les coordonnées de position de robot (x1, y1) étant basées sur une première technologie de localisation (PBT1),
**caractérisé en ce que** le procédé présente les étapes suivantes :
a) définition d'une séquence de coordonnées de position d'apprentissage (x2, y2) du tronçon (102), les coordonnées de position d'apprentissage (x2, y2) étant basées sur une deuxième technologie de localisation (PBT2) différente de la première technologie de localisation (PBT1), et
b) transformation de la séquence définie de coordonnées de position d'apprentissage (x2, y2) en une séquence de coordonnées de position de robot de transformation (x3, y3), les coordonnées de position de robot de transformation (x3, y3) étant basées sur la première technologie de localisation (PBT1).

2. Procédé selon la revendication 1,
- dans lequel la première technologie de localisation (PBT1) ou la deuxième technologie de localisation (PBT2) est une localisation par satellite (GNSS), une localisation locale (LPS), une localisation radio (FPB), une localisation par inertie (IMU), une localisation par odométrie (OPB), une localisation par ultrasons (UPB), une localisation par échographie (SGPB), une localisation par sonar (SPB), une localisation par radar (RPB), une localisation par radargrammétrie (RGPB), un localisation par tachéométrie (TPB), une localisation par lidar (LIPB), une localisation par balayage laser (LAPB), une localisation par caméra (KPB), une localisation par image (BPB) et/ou une localisation par photogrammétrie (PPB).

3. Procédé selon l'une quelconque des revendications précédentes,
- dans lequel l'étape a) présente : la saisie de la séquence de coordonnées de position d'apprentissage (x2, y2) au moyen d'un système de localisation par apprentissage (11), en particulier d'au moins une partie (12) du système de localisation par apprentissage (11) sur le tronçon (102) et/ou sur la surface (100).

4. Procédé selon la revendication 3,
- dans lequel l'étape a) présente : le guidage de ladite au moins une partie (12) du système de localisation par apprentissage (11) au moins le long du tronçon (102), et la saisie des coordonnées de position d'apprentissage (x2, y2) de ladite au moins une partie (12) pendant le guidage.

5. Procédé selon l'une quelconque des revendications précédentes,
- dans lequel l'étape b) présente : un décalage, un pivotement et/ou une mise à l'échelle.

6. Procédé selon l'une quelconque des revendications précédentes,
- dans lequel le procédé présente l'étape suivante : l'identification de coordonnées de position d'apprentissage de point de référence (x2BP, y2BP) concernant la séquence de coordonnées de position d'apprentissage (x2, y2),
- dans lequel le procédé présente l'étape suivante : l'identification de coordonnées de position de robot de transformation de point de référence (x3BP, y3BP) concernant la séquence de coordonnées de position de robot de transformation (x3, y3), et
- dans lequel l'étape b) présente : une transformation, sous réserve de satisfaire la condition que les coordonnées de position d'apprentissage de point de référence (x2BP, y2BP) identifiées et les coordonnées de position de robot de transformation de point de référence (x3BP, y3BP) identifiées identifient un même point de référence (BP).

7. Procédé selon la revendication 6,
- dans lequel le procédé présente l'étape suivante : l'identification de coordonnées de position d'apprentissage de point de référence supplémentaires (x2BP', y2BP') concernant la séquence de coordonnées de position d'apprentissage (x2, y2), le procédé présentant l'étape suivante : l'identification d'autres coordonnées de position de robot de transformation de point de référence (x3BP', y3BP') concernant la séquence de coordonnées de position de robot de transformation (x3, y3), et l'étape b) présentant : une transformation, sous réserve de satisfaire la condition que les coordonnées de position d'apprentissage de point de référence supplémentaires (x2BP', y2BP') identifiées et les coordonnées de position de robot de transformation de point de référence supplémentaires (x3BP', y3BP') identifiées identifient un même point de référence supplémentaire (BP'), et/ou
- dans lequel le procédé présente l'étape suivante : l'identification d'une orientation d'apprentissage (x'2BO, y'2BO) aux coordonnées de position d'apprentissage de point de référence (x2BP, y2BP) concernant la séquence de coordonnées de position d'apprentissage (x2, y2), le procédé présentant l'étape suivante : l'identification d'une orientation de robot de transformation (x'3BO, y'3BO) aux coordonnées de position de robot de transformation de point de référence (x3BP, y3BP) concernant la séquence de coordonnées de position de robot de transformation (x3, y3), et l'étape b) présentant : une transformation, sous réserve de satisfaire la condition que l'orientation d'apprentissage (x'2BO, y'2BO) identifiée et l'orientation de robot de transformation (x'3BO, y'3BO) identifiée identifient une même orientation de référence (BO) au point de référence (BP).

8. Procédé selon la revendication 6 ou 7,
- dans lequel le point de référence (BP, BP'), en particulier le point de référence supplémentaire, est identifié par une position de station d'accueil (DP) d'une station d'accueil (90) pour le robot de traitement d'espace vert (60) et/ou par une position de robot (RP102) du robot de traitement d'espace vert (60), en particulier différente de la position de station d'accueil (DP), et dans lequel en particulier l'orientation de référence (BO) est identifiée par une orientation de station d'accueil (DBO) de la station d'accueil (90) et/ou par une orientation de robot (RBO) du robot de traitement d'espace vert (60).

9. Procédé permettant de faire fonctionner un système de traitement d'espace vert (50), le système de traitement d'espace vert (50) présentant :
- un robot de traitement d'espace vert (60) mobile et autonome,
- un système de localisation de robot (70), le système de localisation de robot (70) étant réalisé pour saisir des coordonnées de position de robot (x1, y1) du robot de traitement d'espace vert (60), les coordonnées de position de robot (x1, y1) étant basées sur une première technologie de localisation (PBT1), et
- un système de comparaison et de commande (80), le système de comparaison et de commande (80) étant réalisé pour comparer les coordonnées de position de robot (x1, y1) saisies avec une séquence de coordonnées de position de robot de transformation (x3, y3) et pour commander un déplacement du robot de traitement d'espace vert (60) en fonction d'un résultat de la comparaison, les coordonnées de position de robot de transformation (x3, y3) étant basées sur la première technologie de localisation (PBT1),
- le procédé présentant : un procédé selon l'une quelconque des revendications précédentes pour apprendre au moins un tronçon (102) d'un bord de délimitation (101) d'une surface (100), et
le procédé présentant les étapes suivantes :
- saisie de coordonnées de position de robot (x1, y1) du robot de traitement d'espace vert (60) au moyen du système de localisation de robot (70),
- comparaison des coordonnées de position de robot (x1, y1) saisies avec la séquence de coordonnées de position de robot de transformation (x3, y3) au moyen du système de comparaison et de commande (80), et
- commande du déplacement du robot de traitement d'espace vert (60) en fonction du résultat de la comparaison au moyen du système de comparaison et de commande (80).

10. Procédé selon la revendication 9,
- dans lequel le robot de traitement d'espace vert (60) présente le système de localisation de robot (70).

11. Procédé selon la revendication 9 ou 10,
- dans lequel le robot de traitement d'espace vert (60) est réalisé sous forme de robot tondeuse (61).

12. Système d'apprentissage (1) permettant d'apprendre au moins un tronçon (102) d'un bord de délimitation (101) d'une surface (100) pour un système de traitement d'espace vert (50), le système de traitement d'espace vert (50) présentant :
- un robot de traitement d'espace vert (60) mobile et autonome, et
- un système de localisation de robot (70), le système de localisation de robot (70) étant réalisé pour saisir des coordonnées de position de robot (x1, y1) du robot de traitement d'espace vert (60), les coordonnées de position de robot (x1, y1) étant basées sur une première technologie de localisation (PBT1),
**caractérisé en ce que** le système d'apprentissage (1) présente :
- un dispositif de définition (10), le dispositif de définition (10) étant réalisé pour définir une séquence de coordonnées de position d'apprentissage (x2, y2) du tronçon (102), les coordonnées de position d'apprentissage (x2, y2) étant basées sur une deuxième technologie de localisation (PBT2) différente de la première technologie de localisation (PBT1), et
- un dispositif de transformation (20), le dispositif de transformation (20) étant réalisé pour transformer la séquence de coordonnées de position d'apprentissage (x2, y2) définie en une séquence de coordonnées de position de robot de transformation (x3, y3), les coordonnées de position de robot de transformation (x3, y3) étant basées sur la première technologie de localisation (PBT1).

13. Système d'apprentissage (1) selon la revendication 12,
- dans lequel le dispositif de définition (10) présente : un système de localisation par apprentissage (11), le système de localisation par apprentissage (11) étant réalisé pour saisir la séquence de coordonnées de position d'apprentissage (x2, y2).

14. Système d'apprentissage (1) selon la revendication 12 ou 13,
- dans lequel le système d'apprentissage (1) présente : un dispositif d'identification (30), le dispositif d'identification (30) étant réalisé pour identifier des coordonnées de position d'apprentissage de point de référence (x2BP, y2BP) concernant la séquence de coordonnées de position d'apprentissage (x2, y2) et pour identifier des coordonnées de position de robot de transformation de point de référence (x3BP, y3BP) concernant la séquence de coordonnées de position de robot de transformation (x3, y3), et
- dans lequel le dispositif de transformation (20) est réalisé pour une transformation, sous réserve de satisfaire la condition que les coordonnées de position d'apprentissage de point de référence (x2BP, y2BP) identifiées et les coordonnées de position de robot de transformation de point de référence (x3BP, y3BP) identifiées identifient un même point de référence (BP).

15. Système de traitement d'espace vert (50), le système de traitement d'espace vert (50) présentant :
- un système d'apprentissage (1) selon l'une quelconque des revendications 12 à 14,
- un robot de traitement d'espace vert (60) mobile et autonome,
- un système de localisation de robot (70), le système de localisation de robot (70) étant réalisé pour saisir des coordonnées de position de robot (x1, y1) du robot de traitement d'espace vert (60), les coordonnées de position de robot (x1, y1) étant basées sur une première technologie de localisation (PBT1), et
- un système de comparaison et de commande (80), le système de comparaison et de commande (80) étant réalisé pour comparer les coordonnées de position de robot (x1, y1) saisies avec une séquence de coordonnées de position de robot de transformation (x3, y3), et pour commander un déplacement du robot de traitement d'espace vert (60) en fonction d'un résultat de la comparaison, les coordonnées de position de robot de transformation (x3, y3) étant basées sur la première technologie de localisation (PBT1).
